(19) Europäisches Patentamt

European Patent Office

Office européen des brevets

(11) **EP 1 549 046 A2**

(12) **EUROPEAN PATENT APPLICATION**

(43) Date of publication:
29.06.2005 Bulletin 2005/26

(51) Int Cl.$^7$: **H04N 3/15**

(21) Application number: 04030686.2

(22) Date of filing: 23.12.2004

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: 25.12.2003 JP 2003429938
20.12.2004 JP 2004367248

(71) Applicant: **Kabushiki Kaisha Toshiba
Tokyo 105-8001 (JP)**

(72) Inventors:
• **Egawa, Yoshitaka, Intellectual Property Division
Minato-ku Tokyo 105-8001 (JP)**
• **Goto, Hiroshige, Intellectual Property Division
Minato-ku Tokyo 105-8001 (JP)**

(74) Representative: **HOFFMANN - EITLE
Patent- und Rechtsanwälte
Arabellastrasse 4
81925 München (DE)**

(54) **Solid-state imaging device, digital camera and digital video camera**

(57)     According to an aspect of the invention, there is provided a solid-state imaging device which discharges a signal from a photodiode (PD) in each cell (1) in which the photodiode, a read gate (Td) reading a signal from the photodiode and a detector (DN) detecting a read signal are two-dimensionally arranged on a semiconductor substrate, then stores a signal in each photodiode, and reads a signal from each photodiode after a storage time. The device comprises a circuit (5, 6, 7, 8) performing an operation of applying to each corresponding cell a first pulse used to discharge a signal in each photodiode corresponding to one horizontal line for a plurality of horizontal lines in a first horizontal scanning period, and an operation of applying to each diode corresponding cell a second pulse used to read a signal in each photodiode corresponding to one horizontal lines for a plurality of horizontal lines in a second horizontal scanning period.

FIG.1

EP 1 549 046 A2

**EP 1 549 046 A2**

## Description

The present invention relates to a solid-state imaging device, a digital camera and a digital video camera.

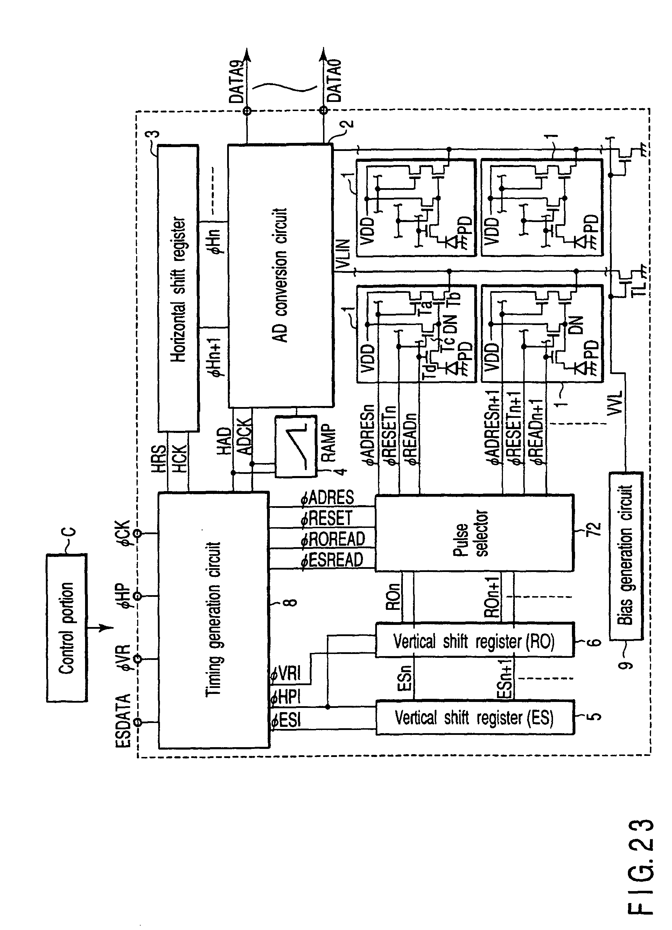

FIG. 23 is a view showing a circuit configuration of a CMOS image sensor according to a conventional example. This image sensor is controlled by a control portion (a CPU or a DSP) C. In an imaging area of this image sensor, one cell (a pixel portion) comprises four transistors (Ta, Tb, Tc, Td) and a photodiode (PD), and this cell is two-dimensionally arranged. A load transistor TL for a source follower circuit is arranged in a horizontal direction at a lower portion of the imaging area. Further, a 10-bit column type AD conversion circuit 2 including a noise canceller circuit is arranged at an upper portion of the imaging area.

A signal from each cell 1 is input to the AD conversion circuit 2, and sequentially output as a 10-bit signal in the horizontal direction in parallel by a horizontal shift register 3 after AD conversion. The AD conversion circuit 2 converts a signal from each cell into a 10-bit digital signal on 0 to 1023 levels based on a level of a triangular wave (RAMP) from an RAMP generation circuit 4 by using a comparator.

Further, in order to operate each cell 1, the AD conversion circuit 2, the RAMP generation circuit 4, the horizontal shift register 3, a vertical shift register (ES) 5, a vertical shift register (RO) 6 and a pulse selector 72, a timing generation circuit 8 and a bias generation circuit 9 are arranged. The control portion C is connected to the timing generation circuit 8.

Each cell 1 discharges a signal stored in each photodiode (PD) of a horizontal line selected by the vertical shift register (ES) 5. A storage time of each cell 1 is set based on EDATA input from the external control portion C, and corresponds to the number of horizontal lines between a horizontal line selected by the vertical shift register (RO) 6 and a horizontal line selected by the vertical shift register (ES) 5. The vertical shift register (ES) 5 selects a horizontal line before selection performed by the vertical shift register (RO) 6. The horizontal line selected by the vertical shift register (ES) 5 is distanced from the horizontal line selected by the vertical shift register (RO) 6 by the fixed number of lines. Consequently, a quantity of signals stored in each photodiode (PD) is controlled. After a storage time, each cell 1 reads signals in the photodiode (PD) on the horizontal line selected by the vertical shift register (RO) 6.

The timing generation circuit 8 turns on a ΦRESET pulse and sets a detection portion (DN) to a reset level through the pulse selector 72 in order to set a gate voltage of an amplification transistor Tb, i.e., a voltage of the detection portion (DN) as a reference voltage (a reset level) before reading signals stored in the photodiode (PD). At this moment, the reset level is output to a vertical signal line (VLIN), and the reset level is stored in a noise canceller capacitor in the AD conversion circuit 2.

Then, the timing generation circuit 8 turns on a read transistor Td through the pulse selector 72 by turning on a ΦREAD pulse, and reads a signal charge stored in the photodiode (PD) to the detection portion (DN). Further, in order to select one horizontal line in one horizontal effective scanning period in a vertical effective scanning period, the timing generation circuit 8 turns on a corresponding line selection transistor Ta through the pulse selector 72 by turning on a ΦADRES pulse, and operates a source follower circuit comprising an amplification transistor Tb and a load transistor TL, As a result, "the signal level + the reset level" is read to the vertical signal line, and the AD conversion circuit 2 removes the reset level from "the signal level + the reset level" by a noise canceller operation, subjects a signal only to AD conversion, and outputs a 10-bit converted signal.

When this image sensor is operated in a 30 Hz VGA mode, a ΦVR pulse of 30 Hz, a ΦHP pulse of 15.7 KHz, a ΦCK pulse of 24 MHz and storage time control data ESDATA are input to the timing generation circuit 8 from the control portion. The timing generation circuit 8 reshapes the input ΦVR pulse and ΦHP pulse by a buffer circuit, and outputs the reshaped pulses as a ΦVRI pulse and a ΦHPI pulse to the vertical shift register (RO) 6. The vertical shift register (RO) 6 clears a register output in an LO period of ΦVRI and changes the level to an LO level. The vertical shift register (RO) 6 sequentially operates with the ΦHPI pulse, and selects (HI) a horizontal line.

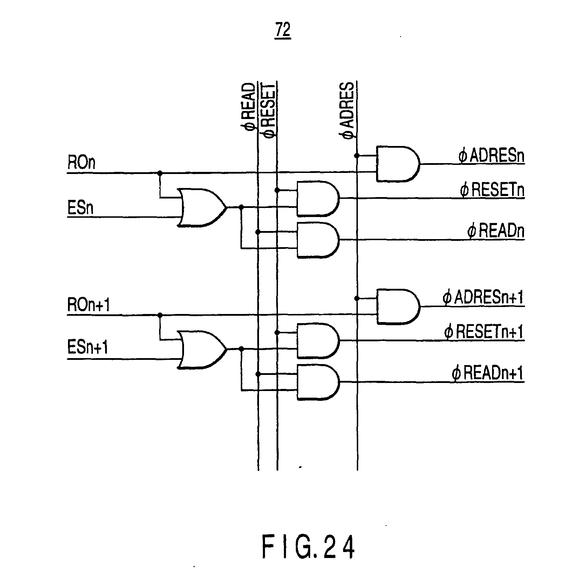

FIG. 24 is a circuit diagram of the pulse selector 72. When an output ROn from the vertical shift register (RO) 6 is HI, the pulse selector 72 outputs ΦREAD, ΦADRES and ΦRESET as ΦREADn, ΦADRESn and ΦRESETn. When ROn+1 is selected by the vertical shift register (RO) 6 in a next horizontal effective scanning period, ΦREADn+1, ΦADRESn+1 and ΦRESETn+1 are likewise output.

Moreover, the pulse selector 72 outputs ΦREADn and ΦRESETn when an output ESn from the vertical shift register (ES) 5 is HI. When ESn+1 is selected by the vertical shift register (ES) 5 in a next horizontal effective scanning period, ΦREADn+1 and ΦRESETn+1 are likewise output.

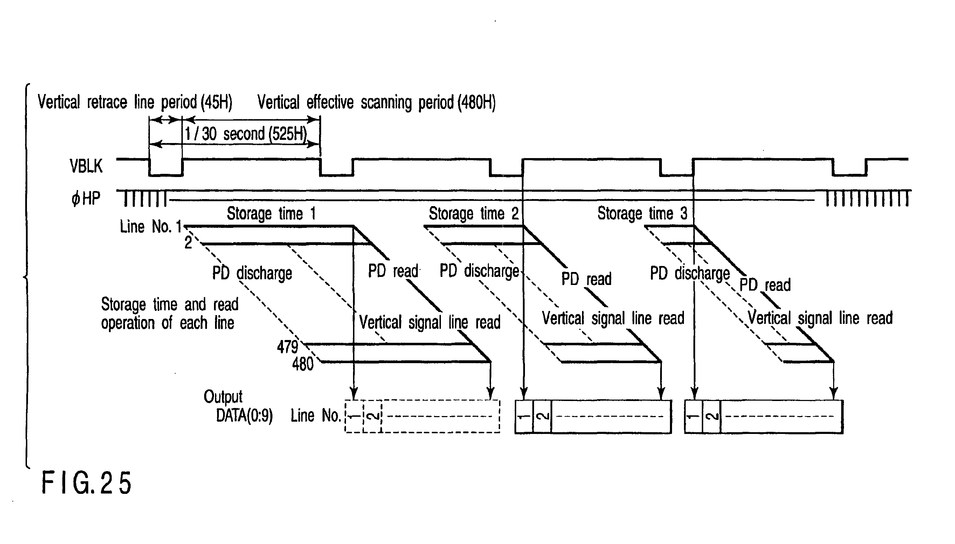

FIG. 25 is a view showing an operation of the above-described CMOS image sensor. First, each photodiode (PD) discharges signals in accordance with the number of scanning lines, i.e., 525 in the order of horizontal lines Nos. 1 to 480 (PD discharge). Then, signals stored in each photodiode (PD) are read in accordance with the number of scanning lines, i.e., 525 in the order of the horizontal lines Nos. 1 to 480 until a next frame (PD read). Signals read from each photodiode (PD) are output to a vertical signal line and subjected to AD conversion by the AD conversion circuit 2 in accordance with each horizontal line, and DATA (0:9) as a 10-bit digital output is output from the image sensor.

In FIG. 25, changes in storage time of the photodiode are indicated as storage times 1, 2 and 3. As can be understood from FIG. 25, respective storage start times of the horizontal lines Nos. 1 to 480 are sequentially shifted in any of the storage times 1, 2 and 3. Therefore, when an image of a subject moving in the horizontal direction is captured, displacement of the image is generated in movement in the order of the horizontal lines Nos. 1 to 480. For example, when an image of a building which stands erect is captured from a moving car, there is an inconvenience that an image in which the building is obliquely inclined is captured. When a sport scene or the like with a motion is captured, a subject is obliquely distorted, and hence there is a problem that the simultaneity of a moving picture is deteriorated.

Additionally, Jpn. Pat. Appln. KOKAI Publication No. 2001-111900 discloses a solid-state imaging device which can perform an electronic shutter operation. Further, Jpn. Pat. Appln. KOKAI Publication No. 2000-023044 discloses a method which realizes an image satisfying the simultaneity in an amplification type solid-state imaging device.

According to an aspect of the invention, there is provided a solid-state imaging device which discharges a signal from a photodiode in each cell in which the photodiode, a read gate which reads a signal from the photodiode and a detection portion which detects a read signal are two-dimensionally arranged on a semiconductor substrate, then stores a signal in each photodiode, and reads a signal from each photodiode after a storage time, the solid-state imaging device comprising: a circuit which performs an operation of applying to each corresponding cell a first pulse signal which is used to discharge a signal in each photodiode corresponding to one horizontal line for a plurality of horizontal lines in a first horizontal scanning period; and an operation of applying to each diode corresponding cell a second pulse signal which is used to read a signal in each photodiode corresponding to one horizontal lines for a plurality of horizontal lines in a second horizontal scanning period.

According to another aspect of the invention, there is provided a solid-state imaging device which discharges a signal from a photodiode in each cell in which the photodiode, a read gate which reads a signal from the photodiode and a detection portion which detects a read signal are two-dimensionally arranged on a semiconductor substrate, then stores a signal in each photodiode, reads a signal from each photodiode to the detection portion after a storage time, and subsequently outputs a signal from the detection portion, the solid-state imaging device comprising: a circuit which performs an operation of applying to each corresponding cell a first pulse signal which is used to discharge a signal in each photodiode corresponding to one horizontal line for a plurality of horizontal lines in a first horizontal scanning period; an operation of applying to each corresponding cell a second pulse signal which is used to read a signal in each diode photodiode corresponding to one horizontal line for a plurality of horizontal lines in a second horizontal scanning period; and an operation of applying to each corresponding cell a third pulse signal which is used to output a signal in the detection portion corresponding to one horizontal line in accordance with each horizontal retrace line period.

According to another aspect of the invention, there is provided a digital camera using above solid-state imaging device.

According to another aspect of the invention, there is provided a digital video camera using above solid-state imaging device.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram showing a structure of a digital video camera to which a solid-state imaging device according to a first embodiment is applied;
FIG. 2 is a view showing a circuit configuration of a CMOS image sensor according to the first embodiment;
FIG. 3 is a circuit diagram of a pulse selector according to the first embodiment;
FIG. 4 is a timing chart of an operation of a pixel portion based on "MODE1" according to the first embodiment;
FIG. 5 is a timing chart of an operation of the pixel portion based on "MODE2" according to the first embodiment;
FIG. 6 is a first timing chart showing an operation of the CMOS image sensor according to the first embodiment;
FIGS. 7A to 7E are a cross-sectional view and potential operation diagrams of a pixel in a storage time 2, showing an operation of the CMOS image sensor according to the first embodiment;
FIG. 8 is a procedure flowchart showing for setting "MODE1" and "MODE2" according to the first embodiment,
FIG. 9 is a second timing chart showing an operation of the CMOS image sensor according to the first embodiment;
FIG. 10 is a view of a circuit configuration showing a countermeasure according to the first embodiment;
FIG. 11 is a block diagram showing a structure of a digital camera to which the solid-state imaging device according to the first embodiment is applied;
FIG. 12 is a view showing a circuit configuration of a CMOS image sensor according to a second embodiment;
FIG. 13 is a circuit diagram of a pulse selector according to the second embodiment;
FIG. 14 is a timing chart of an operation of a pixel portion based on "MODE1" according to the second embodiment;
FIG. 15 is a timing chart of vertical shift registers (ES), (RO) and (ADR) according to the second embodiment;

FIG. 16 is a timing chart of an operation of the pixel portion based on "MODE1" according to the second embodiment;

FIG. 17 is a timing chart of the vertical shift registers (ES) and (RO) according to the second embodiment;

FIG. 18 is a timing chart showing an operation of the CMOS image sensor according to the second embodiment;

FIG. 19 is a procedure flowchart showing for setting "MODE1" and "MODE2" according to the second embodiment;

FIG. 20 is a timing chart showing a KTC noise countermeasure when the second embodiment is low illuminance;

FIG. 21 is a view showing a circuit configuration of a CMOS image sensor having 330000 pixels formed on a semiconductor substrate according to a third embodiment;

FIG. 22 is a timing chart showing an operation of a CMOS image sensor according to the third embodiment;

FIG. 23 is a view showing a circuit configuration of a CMOS image sensor according to a conventional example;

FIG. 24 is a circuit diagram of a pulse selector according to the conventional example; and

FIG. 25 is a timing chart showing an operation of the CMOS image sensor according to the conventional example.

Embodiments will now be described hereinafter with reference to the accompanying drawings.

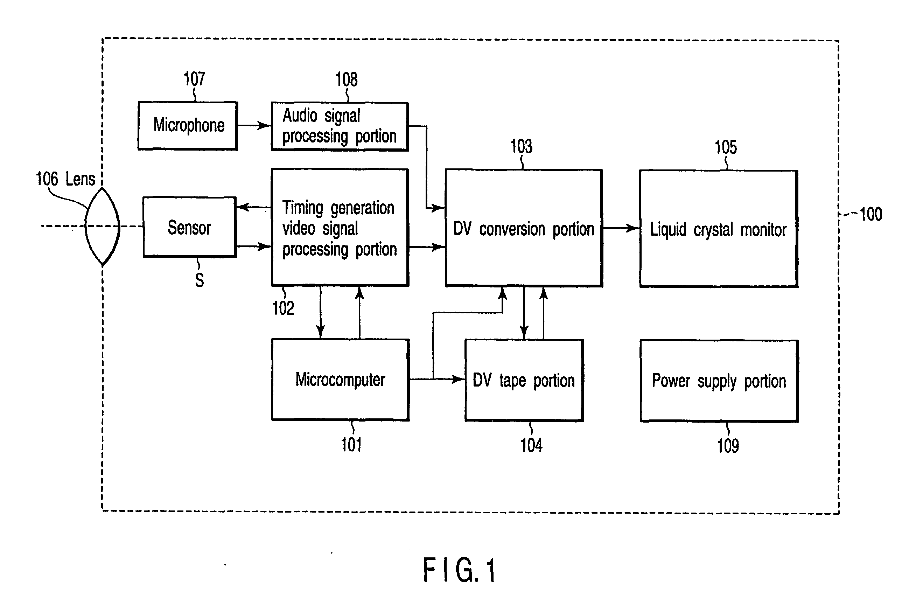

FIG. 1 is a block diagram showing a configuration of a digital video camera to which a solid-state imaging device according to a first embodiment of the present invention is applied. The digital video camera 100 comprises a microcomputer 101, and a timing generation video signal processing portion 102, a DV conversion portion 103 and a DV tape portion 104 are connected to the microcomputer 101. The DV tape portion 104 and a liquid crystal monitor 105 are connected to the DV conversion portion 103. Further, the solid-state imaging device (sensor) S is arranged on an optical axis of a lens 106, and the timing generation video signal processing portion 102 is connected to the solid-state imaging device S. Furthermore, a microphone 107 is connected to the DV conversion portion 103 through an audio signal processing portion 108. Moreover, a power supply portion 109 is provided to the digital video camera 100.

The microcomputer 101 controls the timing generation video signal processing portion 102, the DV conversion portion 103 and the DV tape portion 104. The sensor S picks up an image entered through the lens 106 in accordance with a signal from the timing generation video signal processing portion 102, and outputs a video signal obtained from this image to the timing generation video signal processing portion 102. Additionally, the microphone 107 receives sounds, and outputs an audio signal obtained from the sounds to the audio signal processing portion 108. The video signal processed in the timing generation video signal processing portion 102 and the audio signal processed in the audio signal processing portion 108 are output to the DV conversion portion 103, and subjected to DV conversion. The DV-converted video signal is sent to the DV tape portion 104 and recorded therein. Also, the DV-converted video signal is converted into an analog signal and output to the liquid crystal monitor 105. In the playback mode, the signal recorded in the DV tape portion 104 is converted into an analog signal in the DV conversion portion 103 and output to the liquid crystal monitor 105.

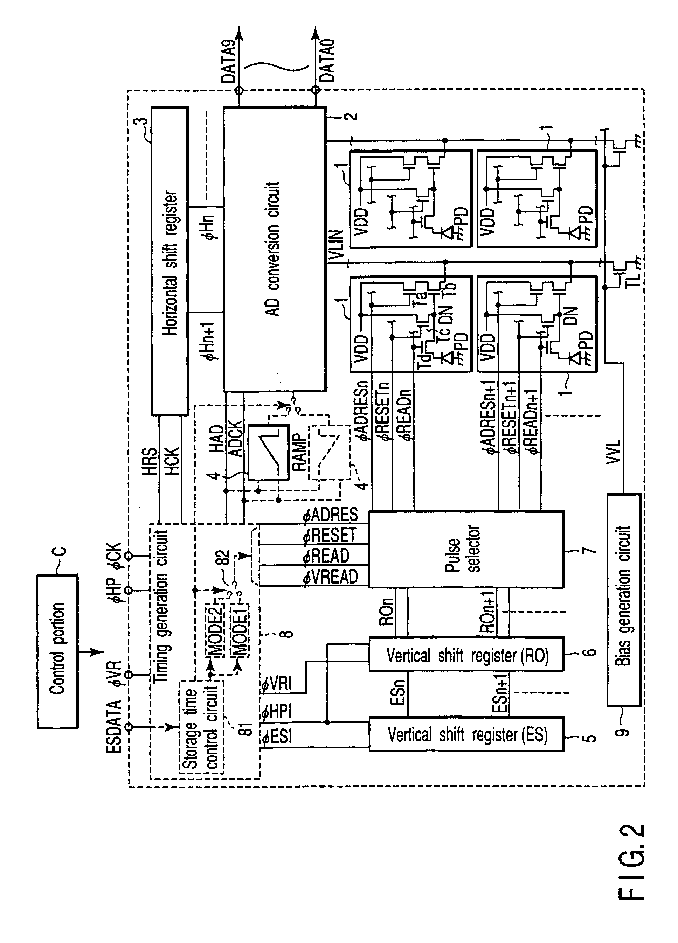

FIG. 2 is a view showing a circuit configuration of a CMOS image sensor (a solid-state imaging device) S having 330000 pixels formed on a semiconductor substrate according to the first embodiment of the present invention. In FIG. 2, like reference numerals denote parts equal to those in FIG. 23. This image sensor is controlled by a control portion (CPU or DSP) C. In an imaging area of this image sensor, one cell comprises four transistors (Ta Tb, Tc, Td) and a photodiode (PD), and this cell is two-dimensionally arranged. A load transistor TL for a source follower circuit is arranged in a horizontal direction at a lower portion of the imaging area. Furthermore, a 10-bit column type AD conversion circuit 2 including a noise canceller circuit exists at an upper portion of the imaging area.

A signal from each cell 1 is input to the AD conversion circuit 2, and sequentially output as a 10-bit signal in a horizontal direction in parallel by a horizontal shift register 3 after AD conversion. The AD conversion circuit 2 converts a signal of each cell 1 into a 10-bit digital signal on 0 to 1023 levels by using a comparator based on a level of a triangular wave (RAMP) from an RAMP generation circuit 4.

Moreover, in order to operate each cell 1, the AD conversion circuit 2, the RAMP generation circuit 4, the horizontal shift register 3, a vertical shift register (ES) 5, vertical shift register (RO) 6 and a pulse selector 7, a timing generation circuit 8 and a bias generation circuit 9 are arranged. The control portion C is connected to the timing generation circuit 8.

Each cell 1 discharges signals stored in each photodiode (PD) of a horizontal line selected by the vertical shift register (ES) 5. A storage time of each cell 1 is set based on EDATA input from the control portion C, and corresponds to the number of horizontal lines between a horizontal line selected by the vertical shift register (RO) 6 and a horizontal line selected by the vertical shift register (ES) 5. The vertical shift register (ES) 5 selects a horizontal line before selection performed by the vertical shift register (RO) 6. The horizontal line selected by the vertical shift register (ES) 5 is distanced from the horizontal lien selected by the vertical shift register (RO) 6 by the fixed number of lines. Consequently, a quantity of signals stored in each photodiode (PD) is controlled. After the storage time, each cell 1 reads signals in the photodiode (PD) on the horizontal line selected by the vertical shift register (RO) 6.

The timing generation circuit 8 turns on a ΦRESET pulse and sets a detection portion (DN) to a reset level through the pulse selector 7 in order to set a gate voltage of an amplification transistor Tb, i.e., a voltage of the detection portion (DN) as a reference voltage (a reset level) before reading signals stored in the photodiode (PD). At this moment, the reset level is output to a vertical signal line (VLIN), and the reset level is stored in a noise canceller capacitor in the AD conversion circuit 2.

Then, the timing generation circuit 8 turns on a read transistor Td through the pulse selector 7 by turning on a ΦREAD pulse, and reads a signal charge stored in the photodiode (PD) to the detection portion (DN). Furthermore, in order to select one horizontal line in one horizontal retrace line period in a vertical effective scanning period, the timing generation circuit 8 turns on a corresponding line selection transistor Ta through the pulse selector 7 by turning on a ΦADRES pulse, and operates a source follower circuit comprising an amplification transistor Tb and a load transistor TL. As a result, "a signal level + a reset level" is read to the vertical signal line (VLIN) from the detection portion (DN), and the AD conversion circuit 2 removes the reset level from "the signal level + the reset level" by a noise canceller operation, subjects the signal only to AD conversion and outputs a 10-bit converted signal.

When this image sensor is operated in a 30 Hz VGA mode, a ΦVR pulse of 30 Hz, a ΦHP pulse of 15.7 KHz, a ΦCK pulse of 24 MHz and storage time control data ESDATA are input to the timing generation circuit 8 from the control portion C. The timing generation circuit 8 reshapes the ΦVR pulse and the ΦHP pulse input thereto by a buffer circuit, and outputs the reshaped pulses as a ΦVRI pulse and a ΦHPI pulse to the vertical shift register (RO) 6. The vertical shift register (RO) 6 clears a register output in an LO period of ΦVRI, and changes the level to an LO level. The vertical shift register (RO) 6 sequentially operates with the ΦHPI pulse, and selects (HI) a horizontal line,

In this first embodiment, an RAMP waveform can be switched between a plus waveform and a minus waveform in synchronization with switching of the operation between "MODE1" and "MODE2" of the image sensor in order to improve in the simultaneity of a moving picture and in the image quality.

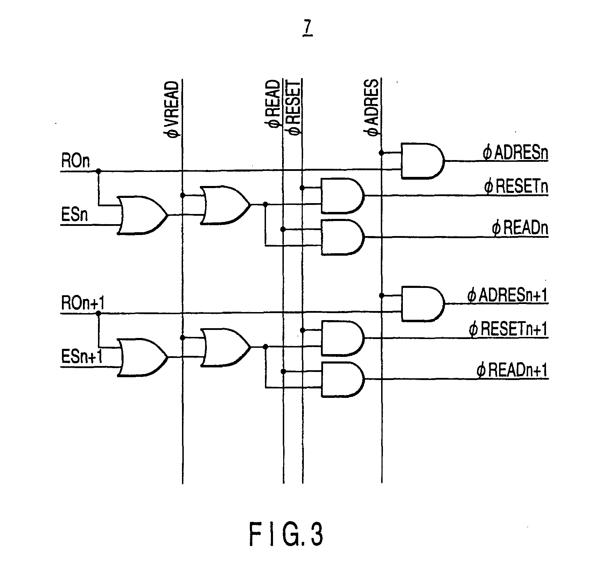

FIG. 3 is a circuit diagram of the pulse selector 7. The pulse selector 7 outputs ΦADRES and ΦRESET as ΦADRESn and ΦRESETn when an output ROn from the vertical shift register (RO) 6 is HI. When ROn+1 is selected by the vertical shift register (RO) 6 in a next horizontal effective scanning period, ΦADRESn+1 and ΦRESETn+1 are likewise output.

Moreover, when a ΦVREAD pulse input from the timing generation circuit 8 is HI, the pulse selector 7 selects all horizontal lines in the vertical effective scanning period, and outputs pulses of ΦRESETn ··· and ΦREADn ··· to all pixels at the same time. Therefore, discharge of PD and read of PD can be carried out with respect to all pixels at the same time.

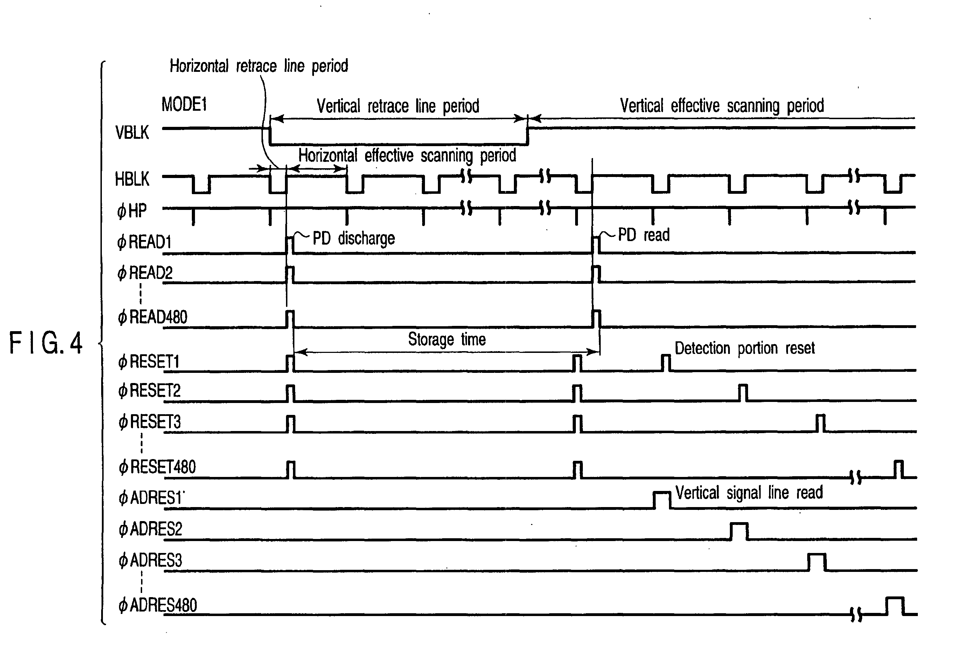

FIG. 4 is a waveform chart showing a drive timing of the operation based on "MODE1". In this case, the image sensor operates at 30 Hz per field, and the number of horizontal lines aligned in the vertical direction is determined as 480.

First, in order to discharge signals in the photodiodes (PD) of all the cells 1 on the initial stage of the vertical retrace line period, the pulse selector 7 changes all of ΦREAD1 to ΦREAD480 to HI at the same time. At this moment, in order to discard signals read to the detection portion (DN) to a power supply (VDD), all of ΦRESET1 to ΦRESET480 are changed to HI. Then, photoelectric conversion is performed in the photodiodes (PD) and signal charges are stored. Subsequently, in order to remove invalid signals indicative of, e.g., a leak current in the detection portions (DN) before simultaneously reading signal charges of the photodiodes (PD) stored in all the cells 1 after end of the vertical retrace line period, all of ΦRESET1 to ΦRESET480 are changed to HI. Then, all of ΦAREAD1 to ΦREAD480 are changed to HI, and signal charges of the photodiodes (PD) stored in all the cells 1 at the same time are simultaneously read to the detection portions (DN).

Then, a signal which is used to output a signal of one horizontal line is output from the detection portion (DN) every horizontal retrace line period in the vertical effective scanning period. For example, when a signal of the horizontal line No. 1 is read, the pulse selector 7 sets ΦADRES1 to HI. As a result, "the signal level + the reset level" is read to the vertical signal line (VLIN). Subsequently, the detection portion (DN) is reset when the pulse selector 7 sets ΦRESET1 to HI, the reset level is output to the vertical signal line (VLIN), and the AD conversion circuit 2 removes the reset level from "the signal level + reset level" by a difference operation of the noise canceller circuit and outputs the signal only.

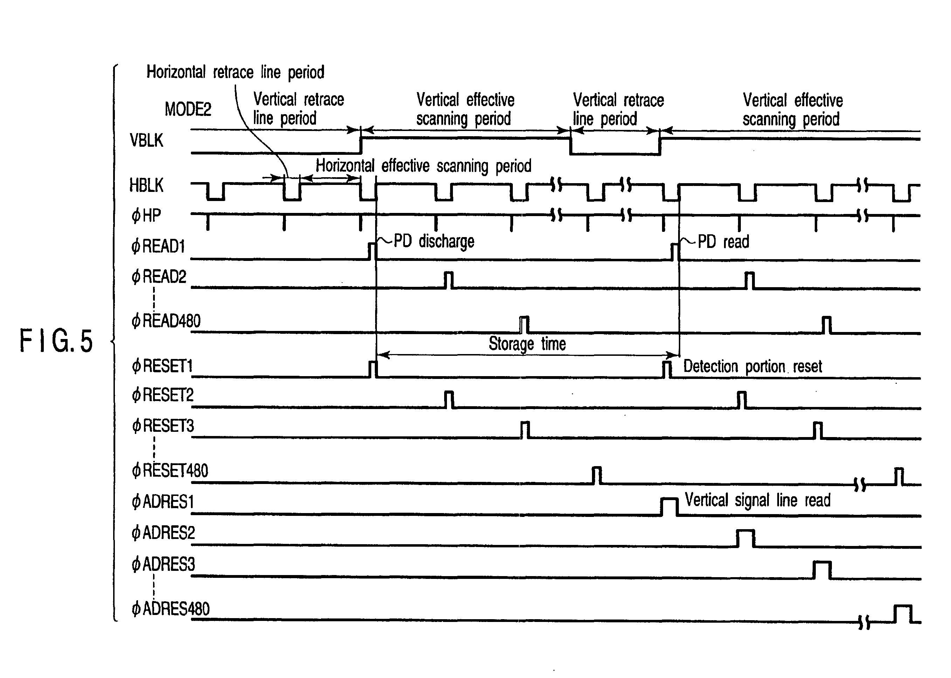

FIG. 5 is a waveform chart showing a drive timing of an operation based on "MODE2". In this example, the image sensor likewise operates at 30 Hz per field.

First, the pulse selector 7 sets ΦREAD1 and ΦRESET1 to HI in the horizontal retrace line period in the vertical effective scanning period, and discharges a signal in the photodiode (PD) of the horizontal line No. 1. This operation is sequentially repeated with respect to the horizontal lines Nos. 1 to 480. Thereafter, photoelectric conversion is performed in the photodiode (PD) and the signal charge is stored. Then, the signal charge in the photodiode (PD) is read in a next vertical effective scanning period.

For example, in case of reading the signal of the horizontal No. 1, the reset level is output to the vertical signal line (VLIN) when the pulse selector 7 sets ΦADRES1 and ΦRESET1 to HI. Then, when the pulse selector 7 sets ΦREAD1 to HI, "the signal level + reset level" is read to the vertical signal line (VLIN). Further, the AD conversion circuit 2 removes the reset level from "the signal level + reset level" by the noise canceller circuit, subjects the signal only to AD conversion, and outputs a converted signal from the image sensor.

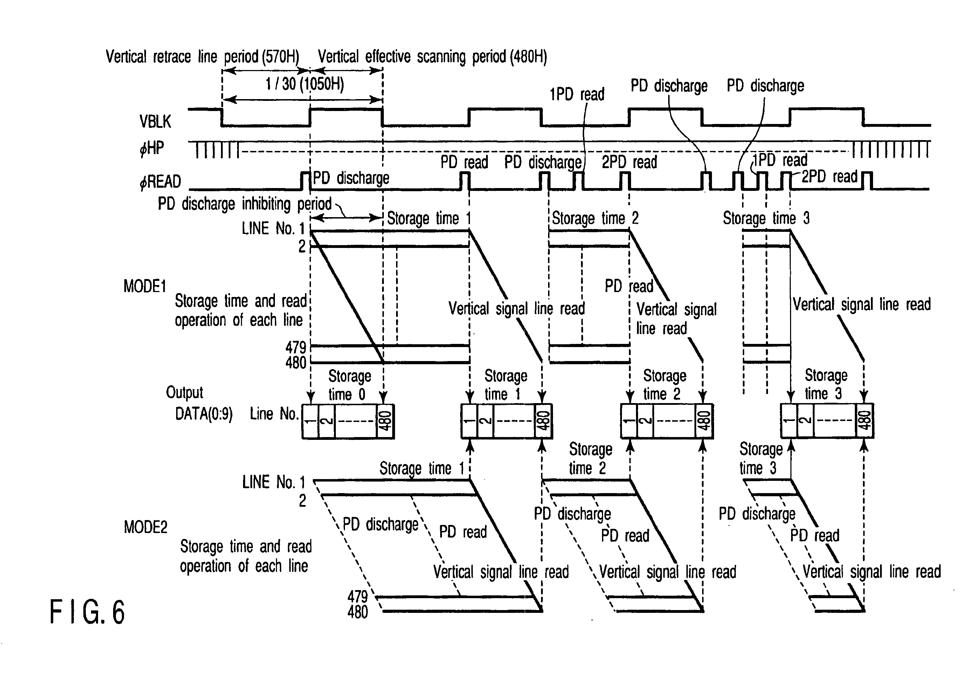

FIG. 6 is a timing chart showing an operation of the CMOS image sensor according to the first embodiment. In FIG. 6, changes in storage time of the photodiode are indicated as storage times 1, 2 and 3. In the first embodiment, the number of scanning lines is set to 1050 which is twofold of that in the conventional example. That is, the vertical retrace line period has 570 lines (570H) and the vertical effective scanning period has 480 lines (480H),

As can be understood from FIG. 6, in "MODE1", all the horizontal lines Nos. 1 to 480 have the same storage start time, and the PD discharge and the PD read are operated with the same timing in all the horizontal lines Nos. 1 to 480. Signals read to the detection portion (DN) are sequentially output in the vertical effective scanning period. However, the PD discharge operation cannot be performed concurrently with the output operation to the vertical signal line (VLIN).

In the storage time 1, storage is performed in all the photodiodes (PD) in an entire period of one frame (1050H) (or one field), and the signal charges stored in all the photodiodes (PD) are simultaneously read to the detection portions (DN). In a next frame (or field), the signal charges of the horizontal lines No. 1 to No. 480 are sequentially read to the vertical signal line (VLIN) in the vertical effective scanning period which is an approximately 1/2 vertical period.

In the next storage time 2, an example where optical input signals which are approximately twofold of those in the storage time 1 are input is shown. In the storage time 2, the ΦREAD pulse is generated twice in the vertical retrace line period, and the 1PD read operation and the 2PD read operation are carried out. In order to read the signal charge stored by performing photoelectric conversion in the photodiode (PD) to the detection portion (DN) in the vertical retrace line period, the ΦREAD pulse is generated and the IPD read operation is effected. Then, in order to read the signal re-accumulated in the photodiode (PD) at the end of the vertical retrace line period, the ΦREAD pulse is generated and the 2PD read operation is carried out. Optical input signals which are twofold of those in the storage time 1 can be converted into the signal charges and output by this operation.

Furthermore, the storage time 3 shows a case where a quantity of optical input signals is large. In this storage time 3, the ΦREAD pulse is generated twice in the 1/2 vertical retrace line period, and the 1PD read operation and the 2PD read operation are carried out, thereby obtaining signal charges which are approximately twofold of those of the photodiode (PD) like the storage time 2. In a next frame (or field), signal charges of the horizontal lines No. 1 to No. 480 are read to the vertical signal line (VLIN) in the vertical effective scanning period which is an approximately 1/2 vertical period.

The storage time can be continuously controlled from 1H to one frame period (or one field period) by this operation. Moreover, a signal quantity which is twofold or above of a saturation of the photodiode (PD) can be obtained by generating the ΦREAD read pulse twice or more in one frame period (or one field period). Additionally, a leak current in the detection portion can be reduced to 1/2 by setting the vertical effective scanning period to a 1/2 frame (or field) (1/2V) period. Therefore, an S/N ratio can be improved to be double or more. In this embodiment, although the ΦREAD read pulse is generated twice or more, it may be generated three times or more if the saturation of the detection portion has a margin. The storage time between the 1PD read operation and the 2PD read operation is subjected to be longer than the storage time between the PD discharge operation and the 1PD read operation. According to this operation, the 2PD read signal can be added to the 1PD read signal without generating unevenness of the saturation in the PD during the 1PD read operation. At the time of the 2PD read operation, there is no problem even when the PD is saturated, because the PD is also saturated at the time of the 1PD read operation. Further, the storage time can be set to an arbitrary period in an entire period of one frame or a vertical retrace line period.

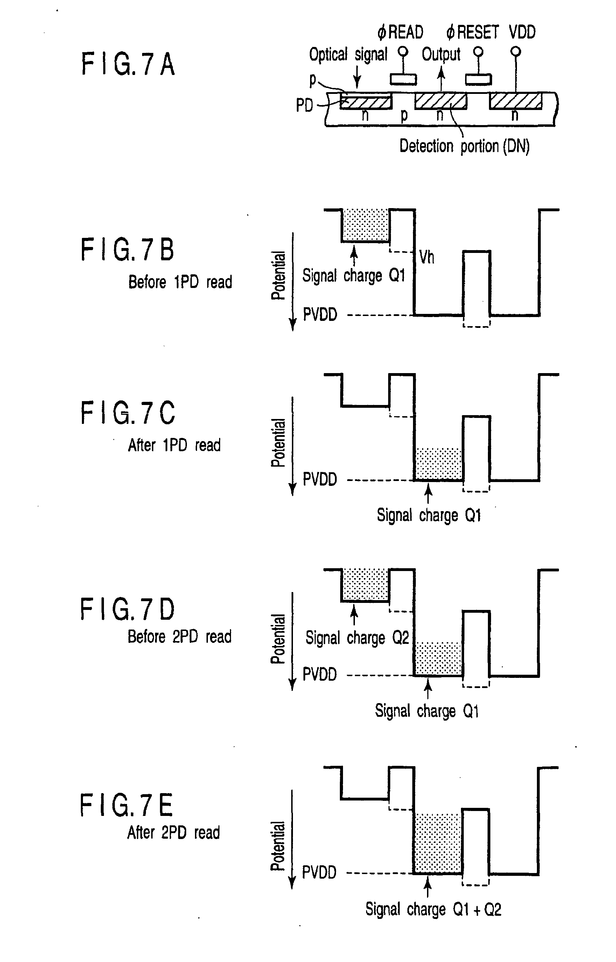

FIG. 7A is a cross-sectional view and a potential operation diagram of the photodiode (PD) illustrating the operation in the storage time 2 depicted in FIG. 6. An n type low-leak photodiode (PD) whose surface is shielded by a p type, the detection portion (DN) and a drain (VDD) are formed on a silicon substrate comprising a p well or a p substrate. A signal read gate (ΦREAD) and a reset gate (ΦRESET) are formed of polysilicon. The detection portion (DN) is connected to an AMP transistor (Tb) for output. FIG. 7B shows a potential diagram immediately before 1PD read. The photodiode (PD) converts the optical signal into an electric charge, and stores a signal charge Q1 which is substantially close to a saturation of the photodiode (PD). FIG. 7C shows a potential diagram immediately after 1PD read. The signal charge Q1 is read to the detection portion (DN) from the photodiode (PD). An application voltage of a read pulse ΦREAD is read by using Vh which is deeper than a potential of the photodiode (PD). Since the surface of the photodiode (PD) is shielded by the P type, the potential of the photodiode is not deeper than a potential formed by a given fixed read voltage. FIG. 7D shows a potential diagram immediately before 2PD read. The photodiode (PD) again converts an optical signal into an electric charge, and stores a signal charge Q2 which is substantially close to a saturation of the photodiode (PD). FIG. 7E shows a potential diagram immediately after 2PD read. A signal charge Q1+Q2 in which the signal charge Q2 read from the photodiode (PD) is added to the signal charge Q1 stored in the detection portion (DN) is stored in the detection portion (DN). That is, it is possible to obtain the signal charge which is substantially twofold of that in the photodiode (PD). Likewise, a signal charge which is substantially twofold of that in the photodiode (PD) can be obtained in the storage time 3.

In the first embodiment, since the vertical signal line read period is 1/2 of that in the conventional example, an output from the image sensor is a signal of 24 MHz which is twofold of 12 MHz in the conventional example. Further, a signal output period is compressed to 1/2 of the vertical effective scanning period. Therefore, in order to output a signal to a regular VGA monitor, speed conversion must be performed in an external frame memory.

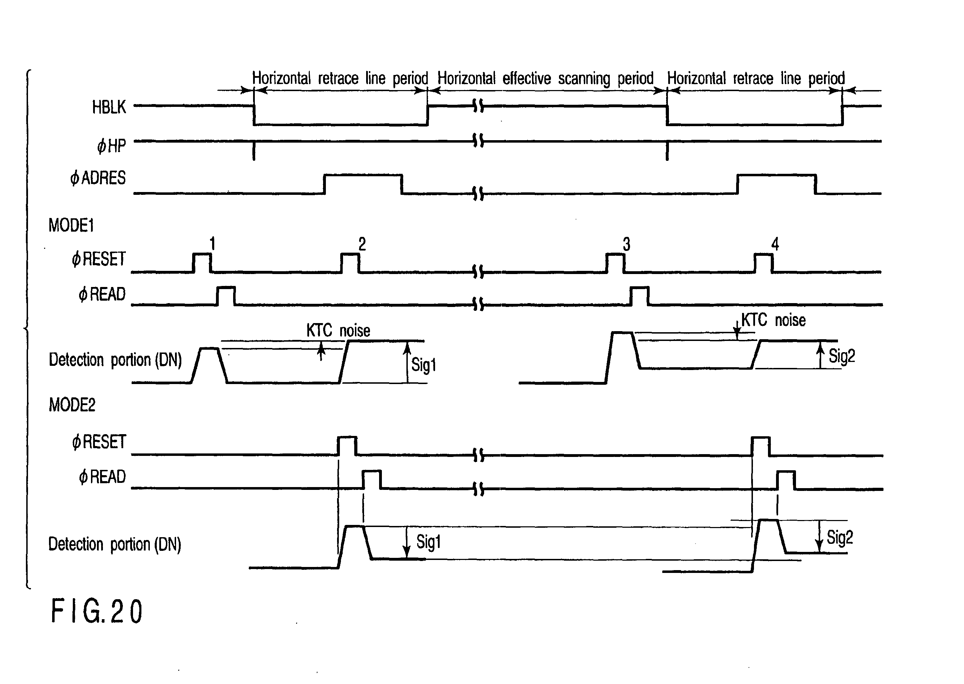

In the first embodiment, "MODE1" and "MODE2" can be switched and used. In "MODE1", the simultaneity can be improved. However, a grained noise is generated by irregularities in each pixel caused due to a KTC noise shown in FIG. 20 (which will be described later), and the image quality is deteriorated. On the other hand, in "MODE2" shown in FIG. 5, the simultaneity is not improved, but the KTC noise can be canceled, and hence the grained noise is not generated, thereby obtaining the high image quality.

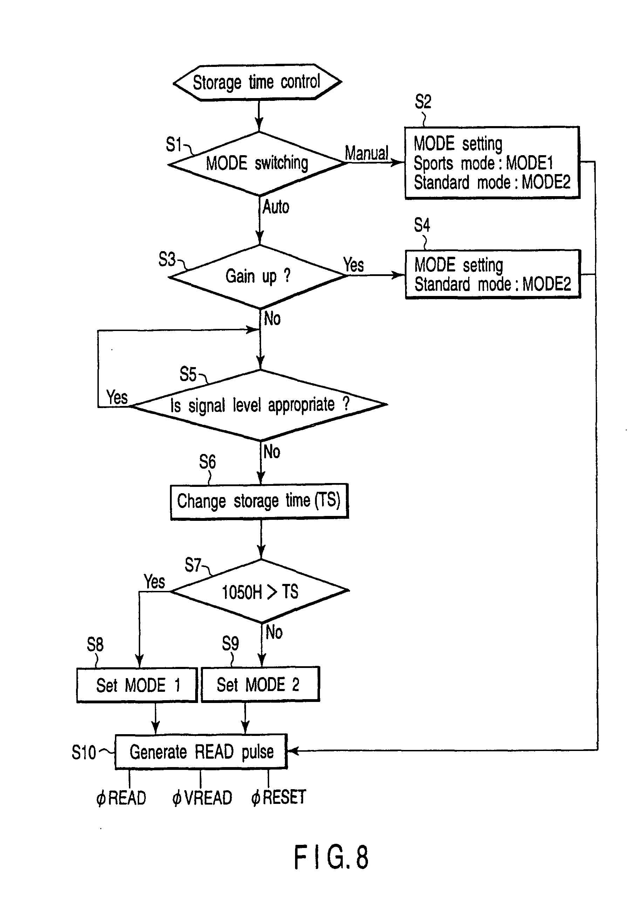

FIG. 8 is a flowchart showing a procedure for setting "MODE1" and "MODE2". Switching of MODEs can be controlled by the manual setting and the auto setting. The operation shown in FIG. 8 is executed by the control of the control portion C.

When a user performs the manual setting in a camera (e.g., a video camera) having this image sensor mounted therein at a step S1, the control portion C sets "MODE1" which improves the simultaneity as a sports mode and sets "MODE2" which obtains the high image quality as a standard mode at a step S2.

When the user performs the auto setting in this camera at the step S1, the control portion C judges whether a DSP for color signal processing uses a gain of the image sensor with the 1-power or the gain is increased at a step S3. If the gain is increased, "MODE2" as the standard mode in which a subject is dark but the high image quality can be obtained is set at a step S4. If the gain is not increased, a signal quantity is judged at a step 55 and the storage time (TS) is changed at a step 36. If the storage time (TS) is shorter than 1050H at a step S7, "MODE1" is set at a step S8. If the storage time (TS) is 1050H at a step S7, "MODE2" is set at a step S9. At a step S10, the timing generation circuit 8 switches pulses ΦREAD, ΦVREAD and ΦRESET and outputs the obtained pulses by the setting of "MODE1" and "MODE2". A reference value of the gain judgment at the step S3 or the storage time judgment at the step S7 can be arbitrarily changed.

In the first embodiment, however, a read frequency is increased in speed. In particular, when a twofold horizontal line number is achieved in a high-vision movie having 2000000 pixels, the speed is increased so that a signal of 37 MHz is changed to a signal of 74 MHz.

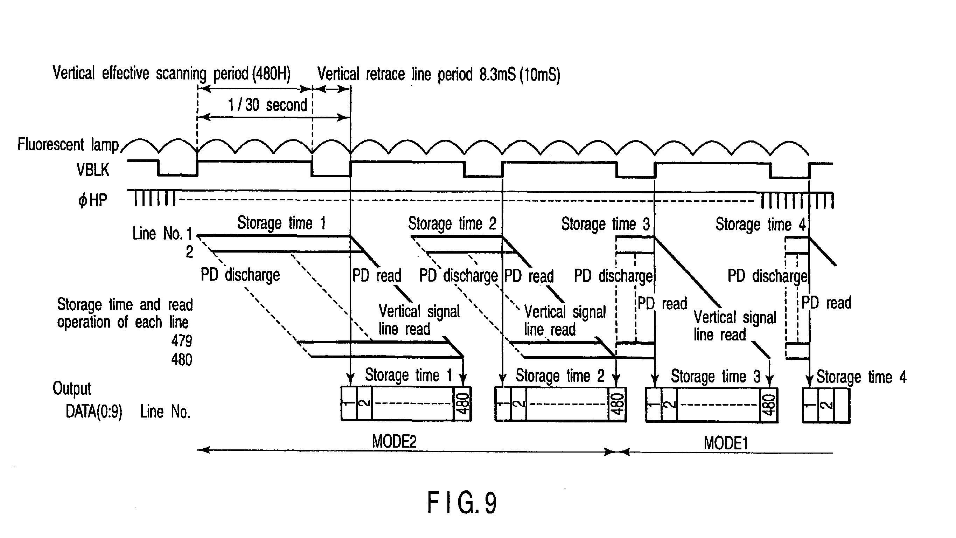

FIG. 9 shows a countermeasure according to the first embodiment. The vertical retrace line period is set to a light emission period of a fluorescent lamp. For example, the vertical retrace line period is set to 8.3 mS in an area where a frequency of a electric power system is 60 Hz and to 10 mS in an area where a frequency of the electric power system is 50 Hz. FIG. 9 shows an operation in the vertical retrace line period of 8.3 mS in the area where 60 Hz is adopted. In the standard 30 Hz VGA operation, the vertical retrace line period is set to 2.8 mS of 45H. In the example shown in FIG. 9, the vertical retrace line period is set to 8.3 mS of 160H, and the operation is effected with the horizontal line number of 640H per frame. An operating frequency is increased to be 640/525 = 1.22-fold of that in the conventional example. In a high-vision movie having 2000000 pixels, a frequency is slightly increased to approximately 45 MHz. In case of the storage time longer than 8.3 mS which is a minimum light emission period of a fluorescent lamp, "MODE2" is executed. When the storage time is not more than 8.3 mS, "MODE1" is set. By this operation, the simultaneity of the storage time which is not more than 8.3 mS can be achieved with a slight increase in operating frequency.

In a camera with a lens aperture of F2.8 using the CMOS image sensor having 330000 pixels according to the first embodiment, the storage time is in the vicinity of 10 mS when an image is captured in a regular office. In case of a sports scene, since an image is captured in a brighter place, improving the simultaneity with the storage time of 8.3 mS (10 mS) or below is an effective method. When an image is captured in "MODE2" with the storage time of 8.3 mS (10 mS) or below, a storage start time for each horizontal line is shifted. Therefore, a difference in a light emission quantity of a fluorescent lamp is generated, and horizontal stripes according to a light emission quantity of the fluorescent lamp are generated in a reproduced image in the monitor. Thus, when "MODE1" is set, horizontal stripes according to a light emission quantity of the fluorescent lamp are not generated because the storage start time is the same in one frame. However, although a difference in signal level is generated between frames, it can be improved by controlling a gain (GAIN) in accordance with each frame like the CCD image pickup element. Therefore, switching to "MODE1" with the storage time of 8.3 mS (10 mS) or below is effective means.

Moreover, a reference for switching between "MODE1" and "MODE2" may be set to 20 mS which is twofold of a minimum light emission period of the fluorescent lamp or 16.6 mS, or it may be set to 4.15 mS (5 mS) which is a 1/2 storage time in which a fluorescent lamp flicker is generated. Additionally, in the first embodiment, the vertical retrace line period is increased without changing the number of the vertical effective scanning lines. However, the number of the vertical effective scanning lines may be reduced and the vertical retrace line period may be increased. The number of effective pixels of VGA is 640 pixels in the horizontal direction and 480 pixels in the vertical direction, and an aspect ratio is 4:3. 360 pixels in the vertical direction are cut out so that an aspect ratio of 16:9 based on the HDTV standards can be obtained, and 10.5 mS with 360H as the vertical effective scanning period and 165H in the vertical retrace line period in 525H as one frame. Further, in case of 1230000 pixels which is fourfold of those in VGA, by setting an aspect ratio of 16:9 in the HDTV mode with 1280 pixels in the horizontal direction and 960 pixels in the vertical direction, 720 pixels in the vertical direction can be obtained, thereby meeting the standards of HDTV mode having 1280 pixels in the horizontal direction and 720 pixels in the vertical direction. In case of the 60 Hz operation in the HDTV mode, "MODE2" is carried out when the storage time is up to 8.3 mS (10 mS) which is a minimum light emission unit of a fluorescent lamp. The mode is switched to "MODE1" with the 1/2 storage time of 4.15 mS or the storage time of 5 mS or below. In the scheme where the number of the vertical effective scanning lines is reduced, the operation can be realized with the same frequency as that in the conventional example, and the frame memory is no longer necessary. Moreover, in "MODE1", the S/N may be improved by effecting PD read twice or more like the example in FIG. 6 so that a saturation signal which is twofold of that in the photodiode is obtained.

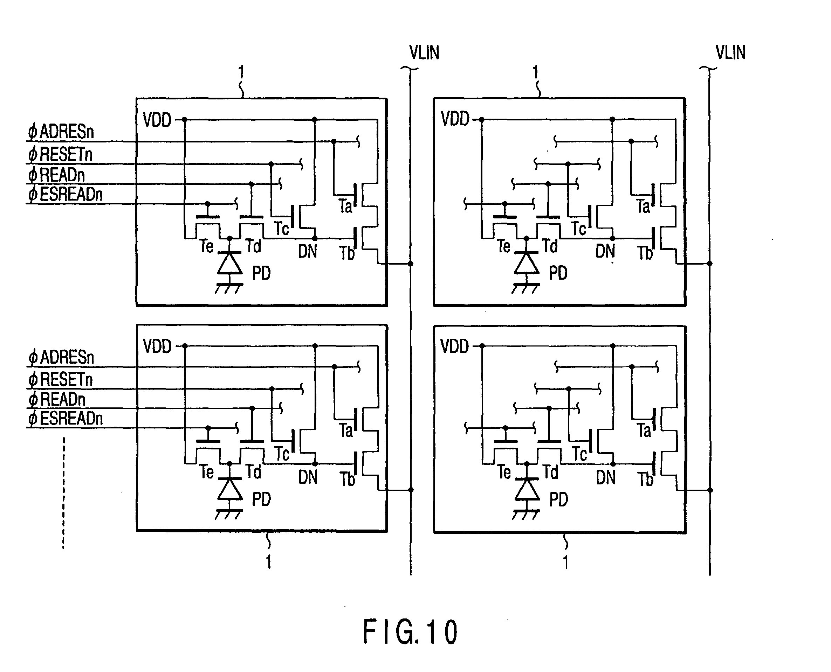

FIG. 10 is a view showing a circuit configuration showing a countermeasure according to the first embodiment. A discharge operation can be effected irrespective of an operation which reads a signal to the vertical signal line (VLIN) by adding a signal discharge transistor Te and a wiring ΦESREAD (an electronic shutter read pulse) to the photodiode (PD) in each cell 1. Therefore, the operation is possible in the storage time in one frame 525H like the conventional example. As a result, a signal of 12 MHz can be obtained as an output from the image sensor like the conventional example.

It is to be noted that the example where the solid-state imaging device according to the first embodiment is applied to the digital video camera which captures a moving picture has been described, but this solid-state imaging device can be also applied to a digital camera which captures a still image.

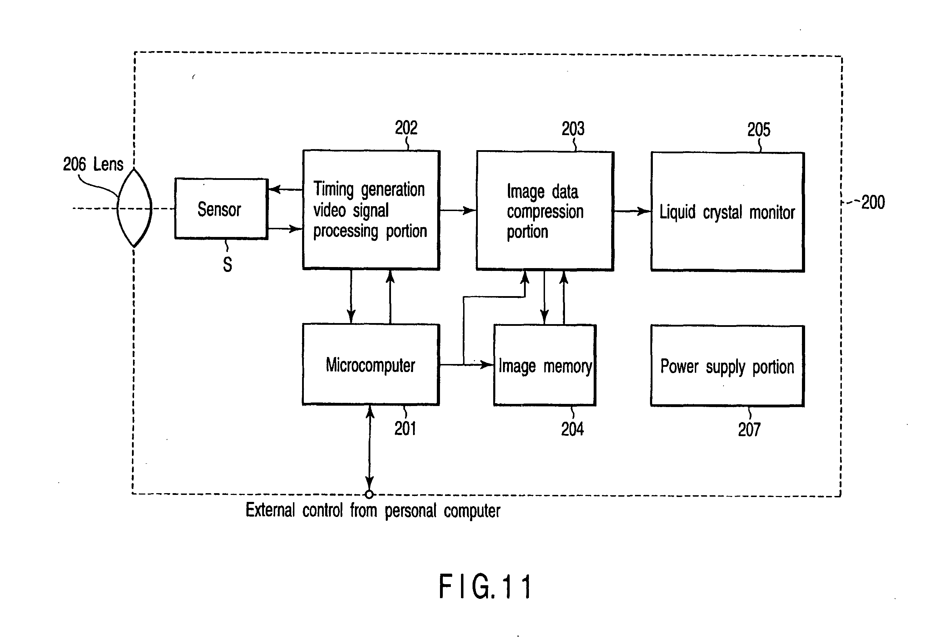

FIG. 11 is a block diagram showing a configuration of a digital camera to which the solid-state imaging device according to the first embodiment of the present invention is applied. A digital camera 200 comprises a microcomputer 201, a timing generation signal processing portion 202, an image data compression portion 203 and an image memory 204 are connected to the microcomputer 201. An image memory 204 and a liquid crystal monitor 205 are connected to the image data compression portion 203. Furthermore, the solid-state imaging device (a sensor) S is arranged on an optical axis of a lens 206, and the timing generation signal processing portion 202 is connected to the solid-state imaging device S. Moreover, a power supply portion 207 is provided in the digital camera 200.

The microcomputer 201 controls the timing generation video signal processing portion 202, the image data compression portion 203 and the image memory 204. The sensor S picks up an image which has entered through the lens 206 in accordance with a signal from the timing generation video signal processing portion 202, and outputs a video signal obtained from this image to the timing generation video signal processing portion 202. The video signal processed in the timing generation video signal processing portion 202 is output to the image data compression portion 203, Converted into an analog signal, and displayed on the liquid crystal monitor 205. When a shutter button is pushed, the video signal is subjected to data compression in the image data compression portion 203 and recorded in the image memory 204. In the playback mode, the data is read from the image memory 204 to the image data compression portion 203, converted into an analog signal, and displayed on the liquid crystal monitor 105.

Incidentally, even if the solid-state imaging device S is applied to the digital camera 200, the operation of the solid-state imaging device S is the same as that when this device is applied to the digital video camera 100.

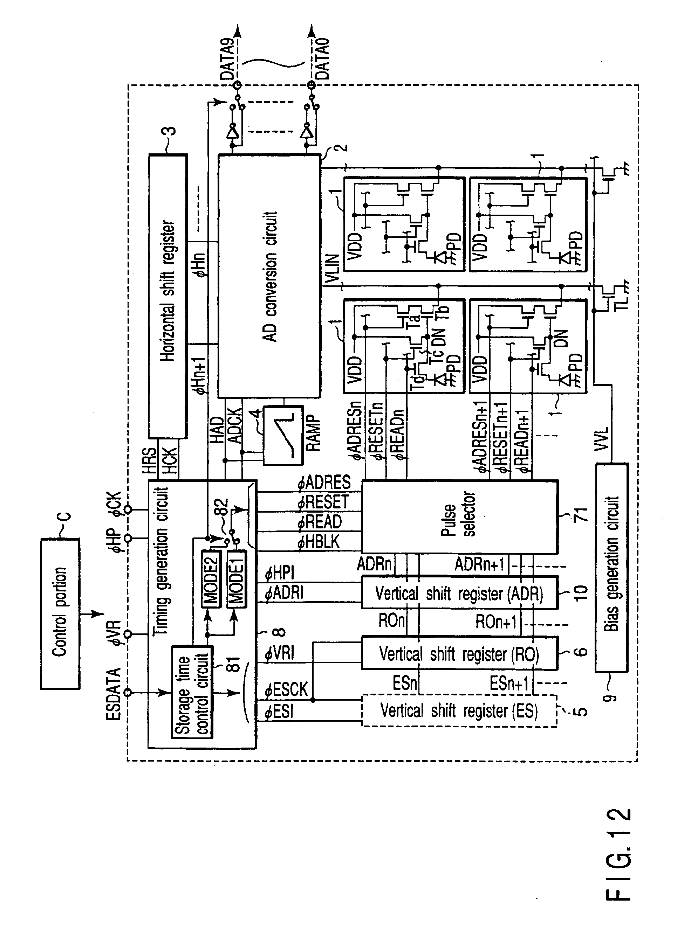

FIG. 12 is a view showing a circuit configuration of an amplification type CMOS image sensor S having 330000 pixels according to a second embodiment of the present invention. In FIG. 12, like reference numerals denote parts equal to those in FIG. 1. In this structure, three vertical shift registers are provided. Although a DRIVER for ΦREAD which is dedicated to simultaneously read all pixels is not provided, a ΦREAD pulse is input to a pulse selector 71, and the input pulse is supplied as ΦREADn from the pulse selector 71 to each horizontal line. Further, a storage time control circuit 81 controls a vertical shift register (ES) 5, a vertical shift register (RO) 6 and a pulse generation circuit 82 for "MODE1" and MODE2". An output signal from the pulse generation circuit 82 is controlled to be switched in accordance with pulse switching in "MODE1" and "MODE2" by the storage time control circuit 81.

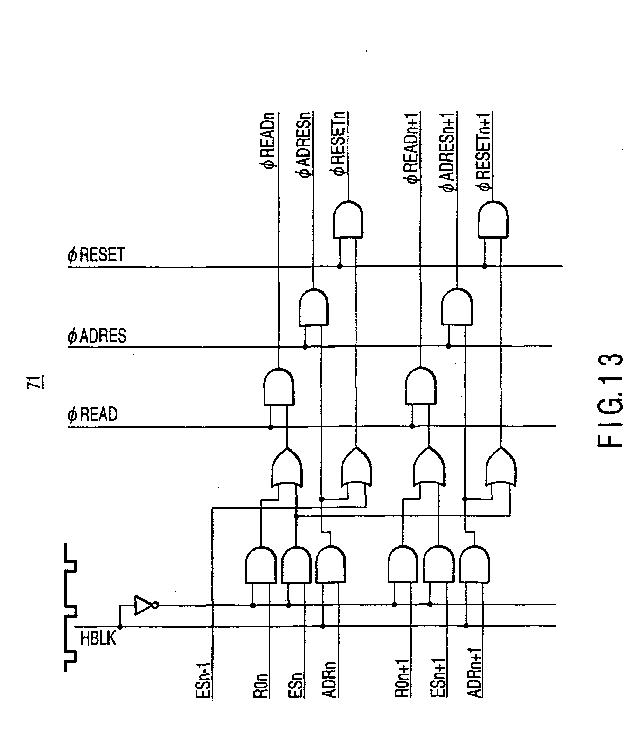

FIG. 13 is a circuit diagram of the pulse selector 71. Outputs ROn, ESn (an electronic shutter control input pulse) and ADRn from the three vertical shift registers (RO) 6, (ES) 5 and (ADR) 10 are supplied to the pulse selector 71, and ΦREADn, ΦRESETn and ΦADRESn are output to the cell 1 through an AND circuit and an OR circuit. ΦREAD, ΦADRES and ΦRESET are supplied to each AND circuit from the timing generation circuit 8.

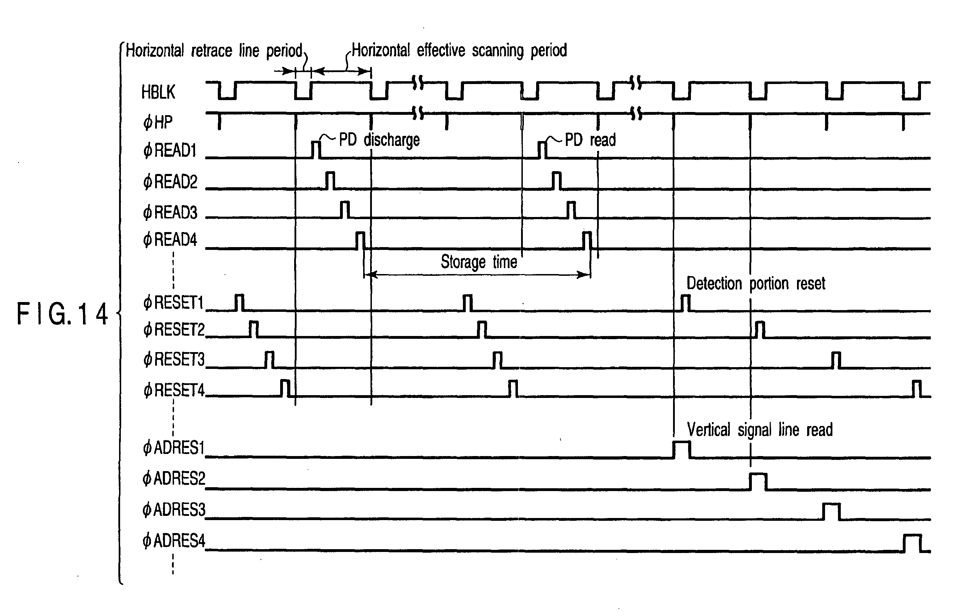

FIG. 14 is a waveform chart showing a drive timing of an operation based on "MODE1". In this case, the image sensor operates at 30 Hz per field.

In FIG. 14, signals in the photodiodes (PD) corresponding to, e.g., four horizontal lines are sequentially discharged in a horizontal effective scanning period according to a storage time. In this case, the pulse selector 71 sequentially applies ΦRESET1 to ΦRESET4 to each detection portion (DN) in the horizontal effective scanning period, and each detection portion (DN) is reset. Then, the pulse selector 71 sequentially applies ΦREAD1 to ΦREAD4 to each photodiode (PD) in a next horizontal effective scanning period, and a discharge operation for signals by an electronic shutter is executed. Likewise, the pulse selector 71 sequentially applies ΦRESET5 to ΦRESET8 to the respective detection portions (DN) for next four lines in a next horizontal effective scanning period, and each detection portion (DN) is reset. Furthermore, the pulse selector 71 sequentially applies ΦREAD5 to ΦREAD8 to the respective photodiodes (PD) in a next horizontal effective scanning period, and a discharge operation for signals by the electronic shutter is executed. This operation is sequentially repeated so that signals in the photodiodes for all horizontal lines are discharged.

Then, after a storage time set based on ESDATA, an operation by which signals are read from the photodiodes (PD) is performed. In this case, the pulse selector 71 sequentially applies ΦRESET1 to ΦRESET4 to the respective detection portions (DN) in a horizontal effective scanning period, and each detection portion (DN) is reset. Moreover, the pulse selector 71 sequentially applies ΦREAD1 to ΦREAD4 to the respective photodiodes (PD) in a next horizontal effective scanning period, and the read operation from each photodiode (PD) is executed. Likewise, the pulse selector 71 sequentially applies ΦRESET5 to ΦRESET8 to the respective detection portions (DN) for next four lines in a next horizontal effective scanning period, and each detection portion (DN) is reset. Then, the pulse selector 71 sequentially applies ΦREAD5 to ΦREAD8 to the respective photodiodes (PD) in a next horizontal effective scanning period, and the read operation from each photodiode (PD) is executed. This operation is sequentially repeated so that signals in the photodiodes (PD) for all horizontal lines are read.

Thereafter, reading to a vertical signal line VLIN is performed. First, the pulse selector 71 sets ΦADRES1 to HI, and reads "a signal level + a reset level" in the detection portion for a horizontal line No. 1 to the vertical signal line. Then, the pulse selector 71 resets the detection portion by setting ΦRESET1 to HI, the reset level is output to the vertical signal line, and an AD conversion circuit 2 removes the reset level from "the signal level + the reset level" by a difference operation of a noise canceller circuit and outputs a signal only. This operation is sequentially performed for each horizontal line every horizontal retrace line period.

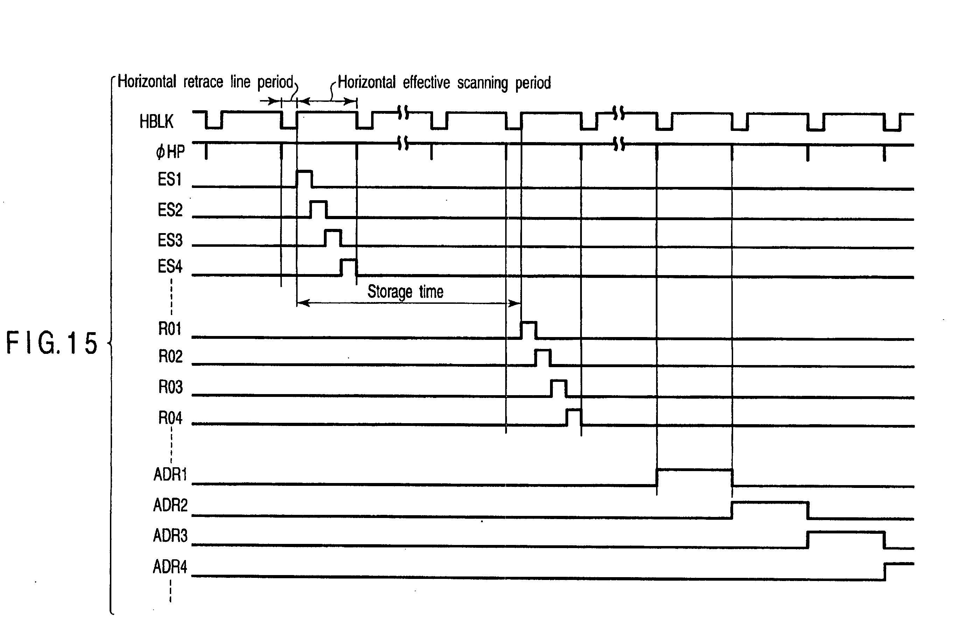

FIG. 15 is a view showing output waveforms of the vertical shift registers (ES) 5, (RO) 6 and (ADR) 10. In FIG. 15, ES1 to ES4 from the vertical shift register (ES) 5 are sequentially set to HI at the time of the discharge operation by the electronic shutter in one horizontal effective line period in accordance with the output waveforms depicted in FIG. 14. Moreover, in signal reading in one horizontal effective scanning period, RO1 to RO4 from the vertical shift register (RO) 6 are sequentially set to HI. At the time of outputting signals to the vertical signal line, ADR1 to ADR4 from the vertical shift register (ADR) 10 are sequentially set to HI in the horizontal effective scanning period. This operation is sequentially performed with respect to horizontal lines Nos. 1 to 480.

In the second embodiment, although the electronic shutter discharge and signal read operations of the photodiodes (PD) are carried out for four horizontal lines in one horizontal effective scanning period, the number of lines per horizontal effective scanning period can be increased as long as the ΦREAD pulse or the ΦRESET pulse can respond. Additionally, generation of pulses is not restricted to one horizontal effective scanning period, and pulses can be generated in one horizontal scanning period including the horizontal retrace line period.

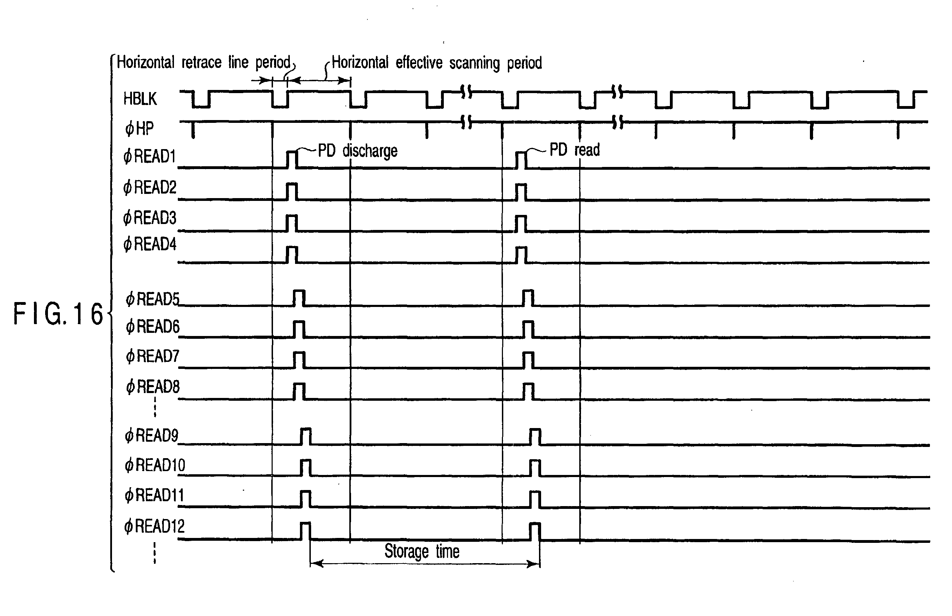

FIG. 16 is a waveform chart showing a drive timing of the operation based on "MODE1" which further improves the simultaneity as compared with FIG. 14.

In FIG. 16, at the time of the electronic shutter discharge operation or the signal read operation, in one horizontal effective scanning period, a plurality of horizontal lines are determined as one set, these plurality of horizontal lines are simultaneously selected, and the discharge operation or the read operation is sequentially effected from the photodiodes (PD) in accordance with each selected set of the plurality of horizontal lines. For example, the pulse selector 71 applies ΦREAD1 to ΦREAD4 in the form of pulses having the same phase. Then, the pulse selector 71 applies ΦREAD5 to ΦREAD8 in the form of pulses having the same phase. In this manner, four horizontal lines are determined as one set so that the pulses having the same phase are applied, and the pulses are applied while sequentially shifting the phase in accordance with each four horizontal lines. As a result, the simultaneity which is fourfold of that in the example of FIG. 14 can be obtained. Although four horizontal lines have the same phase, the number of lines can be increased from two horizontal lines to possible number.

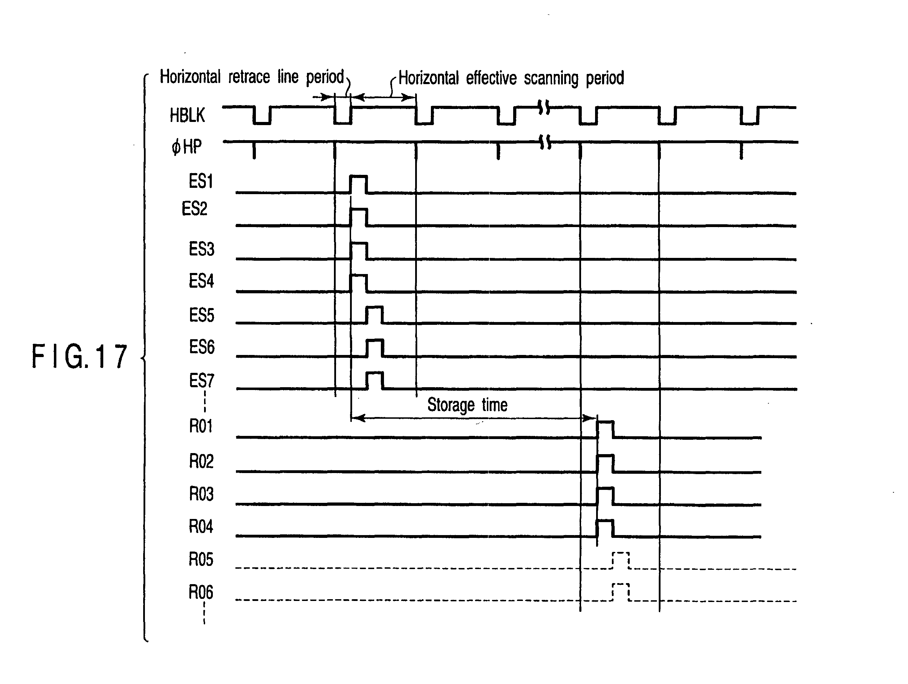

FIG. 17 is a view showing output waveforms of the vertical shift registers (ES) 5 and (RO) 6. In FIG. 17, outputs from the vertical shift register (ES) 5 and outputs from the vertical shift register (RO) 6 are simultaneously set to HI in accordance with the output waveforms shown in FIG. 16 while determining four horizontal lines as one set. It is to be noted that an output from the vertical shift register (ADR) is set to HI in accordance with each horizontal line like the example depicted in FIG. 5.

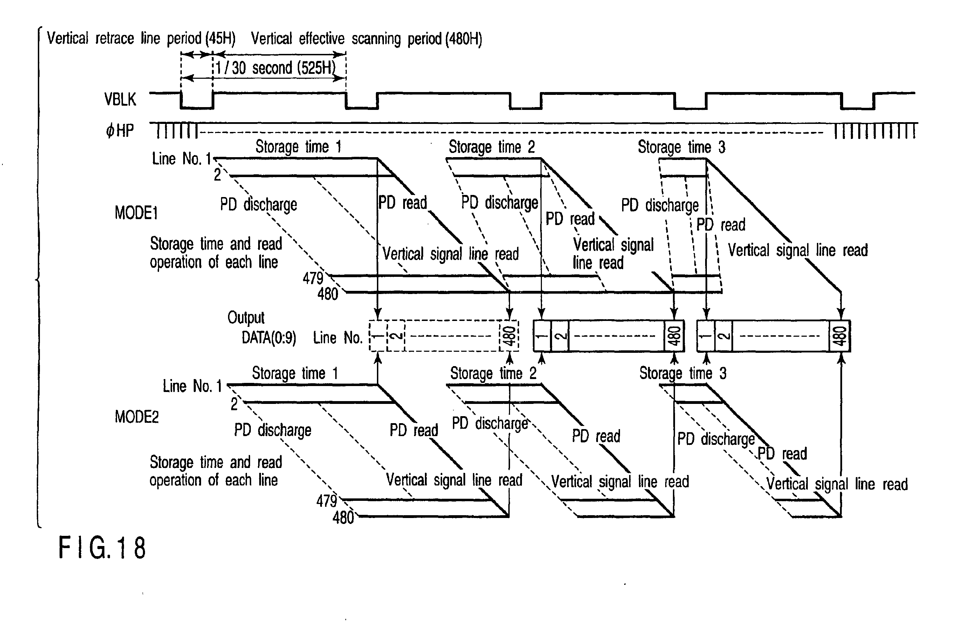

FIG. 18 is a view showing the operation of the above-described CMOS image sensor. In FIG. 18, changes in a storage time of the photodiode are indicated as storage times 1, 2 and 3. In the longest storage time 1, the PD discharge operation and the PD read operation are carried out for one horizontal line only in one horizontal effective scanning period. Therefore, the respective storage start times of the horizontal line No. 1 and the horizontal line No. 480 are shifted for approximately one frame (30 Hz). On the other hand, in the storage time 2, the PD discharge operation and the PD read operation are effected for two horizontal lines in one horizontal effective scanning period. Therefore, as compared with the storage time 1, a difference between the respective storage start times of the horizontal line No. 1 and the horizontal line No. 480 becomes approximately 1/2, and the simultaneity is improved. Additionally, in the storage time 3, the PD discharge operation and the PD read operation are carried out for eight horizontal lines in one horizontal effective scanning period. Therefore, as compared with the storage time 1, a difference between the respective storage start times of the horizontal line No. 1 and the horizontal line No. 480 is improved to be approximately 1/8. Further, when the PD discharge operation and the PD read operation are effected for 16 horizontal lines and 32 horizontal lines in one horizontal effective scanning period, the simultaneity can be further improved. As to reading signals stored in the detection portion (DN) to the vertical signal line (VLIN), signals are output for each horizontal line in the horizontal effective scanning period irrespective of the storage time.

In a mechanical shutter of a general single lens reflex camera, a focal plane operation based on a shutter speed of 1/125 second to 1/250 second is carried out. In this embodiment, in a 30 Hz (1/30 second) moving picture capturing operation, a shutter speed of 1/120 second which is a fourfold speed or of 1/240 second which is an eightfold speed can be realized by the operation of reading four horizontal lines or eight horizontal lines in one horizontal effective scanning period. That is, the shutter speed becomes equal to that of the single lens reflex camera. Furthermore, increasing the number of the horizontal lines improves the simultaneity as compared with the single lens reflex camera.

As described above, in this embodiment, the operations in "MODE1" and "MODE2" can be switched and executed, and the simultaneity can be improved in "MODE1". However, a grained noise is generated due to irregularity in each pixel caused by a KTC noise shown in FIG. 20 (which will be described later), and the image quality is deteriorated. On the other hand, although the simultaneity is not improved in "MODE2", the KTC noise can be cancelled, and hence the grained noise is not generated, thereby obtaining the high image quality. The timing chart of MODE2 is the same as that of FIG. 5.

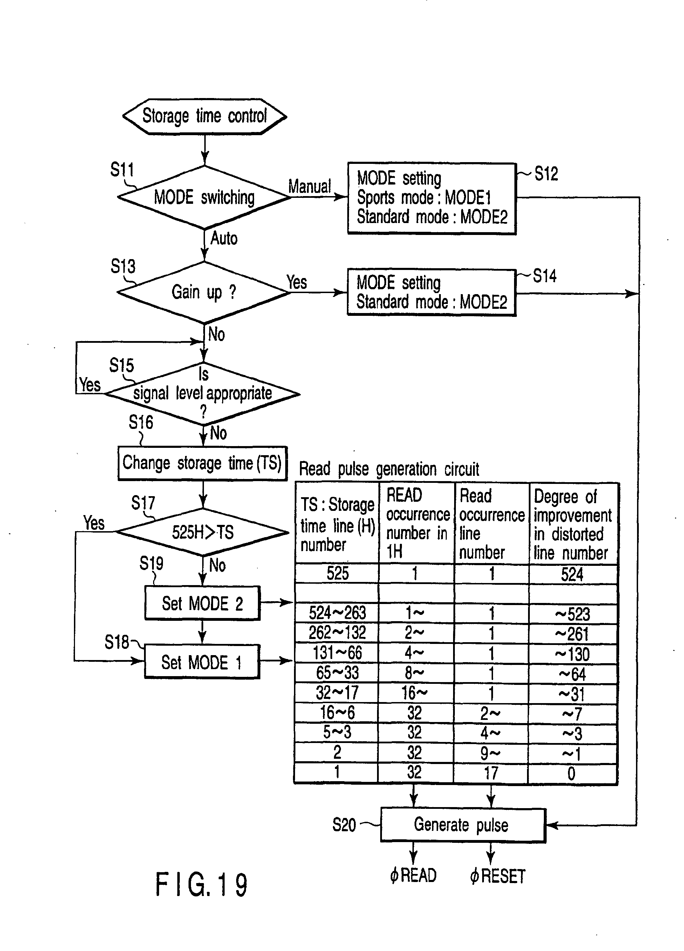

FIG. 19 is a flowchart showing a procedure for setting "MODE1" and "MODE2". MODE switching can be controlled by manual setting and auto setting. The operation shown in FIG. 19 can be executed by the control of the control portion C.

When a user performs the manual setting in a camera in which the image sensor is mounted (e.g., a video camera) at a step S11, the control portion C sets "MODE2" which improves the simultaneity as a sports mode and sets "MODE2" which obtains the high image quality as a standard mode at a step S12.

When the user performs the auto setting in this camera at the step S11, the control portion C judges whether a gain of the image sensor is used as the 1 power or the gain is increased in a DSP for color signal processing at a step S13. If the gain is increased, "MODE2" as the standard mode in which a subject is dark but the high image quality can be obtained is set at a step S14. If the gain is not increased, a signal quantity is judged at a step S15, and a storage time (TS) is changed at a step 516. If the storage time (TS) is shorter than 525H at a step 517, "MODE1" is set at a step 518. If the storage time (TS) is 525H at the step S17, "MODE2" is set at a step S19. At a step 520, the timing generation circuit 8 switches and outputs pulses of ΦREAD and ΦRESET based on the setting of "MODE1" and "MODE2". Reference values for the gain judgment at the step S13 and the storage time judgment at the step S17 can be arbitrarily changed.

A READ pulse generation circuit in the timing generation circuit 8 varies the number of Φ READ pulses to be generated in 1H and the number of ΦREAD generation lines (the number of horizontal lines which generate pulses at the same time) in accordance with the storage time.

The number of ΦREAD pulses to be generated in 1H can be calculated from the following expression:

$$\text{The number of } \Phi\text{READ pulses to be generated} = 1 + (525 - \text{the number of storage lines}) / \text{the number of storage lines}$$

The number of lines which generate ΦREAD pulses at the same time can be calculated from the following expression:

$$\text{The number of } \Phi\text{READ generation lines} = \text{the number of } \Phi\text{READ pulses to be generated} / \text{the maximum number of } \Phi\text{READ pulses to be generated}$$

The maximum number of ΦREAD pulses to be generated is determined as 32. The number of ΦREAD pulses to be generated indicates how many ΦREAD pulses can be generated in the 1H period, and ΦREAD pulses are generated for 32 times in a 1.98 μs cycle in a 1/30 (second) / 525 (lines) = 63.5 μs period in this example.

The simultaneity (a distorted line) is improved as the number of distorted lines mentioned is small. Reference value for the gain judgment at the step S13 and the storage time judgment at the step S17 can be arbitrarily changed.

Nearly all general single lens reflex cameras carry out the focal plane shutter operation. A focal plane shutter moves a slit in front of a film in an up-and-down direction or a right-and-left direction. A widely accepted current single lens reflex camera usually determines a slit width as a full aperture and operates at a shutter speed of 1/125 to 1/250 second. In the camera according to this embodiment, the storage time becomes 126H with the shutter speed of 1/125 second, and the storage time becomes 63H at the shutter speed of 1/250 second. Therefore, the simultaneity equivalent to that of a single lens reflex camera using a vertical slit can be obtained. Furthermore, if the storage time is short, the simultaneity can be further improved as compared with the single lens reflex camera.

FIG. 20 is a timing chart showing a KTC noise countermeasure when illuminance is low. For example, in the storage time 2 or the storage time 3 shown in FIG. 18, "MODE1" depicted in FIG. 20 is effected. In this case, since a subject is sufficiently bright, the electronic shutter is operated. Therefore, a signal level is large, and an influence of the KTC noise is small. On the contrary, when illuminance is low, the operation in the storage time 1 is carried out, and the simultaneity cannot be obtained. In this case, "MODE2" is performed, signals are not stored in the detection portion (DN) but stored in the photodiode (PD), and the signals are read from the photodiode (PD) in one horizontal retrace line period and output to the vertical signal line (VLIN).

In "MODE1", the ΦRESET pulse is first applied in order to reset an invalid signal of, e.g., a leak current in the detection portion (DN). Then, the (ΦREAD pulse is applied in order to read the signals from the photodiode (PD), and the read signals are held in the detection portion (ON). Furthermore, when the ΦADRES pulse is applied in the horizontal retrace line period, "the signal level + the reset level" held in the detection portion (DN) is output to the vertical signal line (VLIN). Then, the ΦRESET pulse is applied, and the reset level is output to the vertical signal line (VLIN). Thereafter, in the AD conversion circuit 2, a difference operation for the reset level and "the signal level + the reset level" is carried out, and a reset noise component is removed from "the signal level + the reset level" so that the signal only is maintained. However, a KTC noise is mixed in this signal since the first reset level in the detection portion (DN) is different from the reset level in the horizontal retrace line period.

On the other hand, the ΦRESET pulse is first applied in order to reset an invalid signal of, e.g., a leak current in the detection portion (DN). At this moment, the reset level is output to the vertical signal line (VLIN). Then, the ΦREAD pulse is applied in order to read signals from the photodiode (FD). Then, the signals are read to the detection portion (DN). "The signal level + the reset level" is output to the vertical signal line (VLIN). Thereafter, the AD conversion circuit 2 performs the difference operation for the reset level and "the signal level + the reset level", and removes the reset noise component from "the signal level + the reset level", thereby maintaining the signal only. In this operation, the KTC noise is not mixed since the reset level does not fluctuate.

In "MODE1", the signal is output in a positive form. On the other hand, in "MODE2", the signal is output in a negative form. Therefore, the signal in "MODE2" is inverted so that the signal is changed to a positive signal at the time of digital output.

In "MODE1", the signal exists in the detection portion (DN), and the detection portion (DN) is then reset. Therefore, the KTC noise having a different level is mixed in the reset detection portion (DN) due to the reset operation. On the other hand, in "MODE2", the detection portion (DN) is reset and the. reset level is then output. Therefore, the KTC noise is mixed in this reset level. Thereafter, the signal is read from a complete transfer type photodiode (PD). The detection portion (DN) has "the signal level + the reset level containing the KTC noise". Then, the AD conversion circuit 2 removes the reset level containing the KTC noise by the difference operation for "the signal level + the reset level containing the KTC noise" and the reset level containing the KTC noise, thereby outputting the signal containing no KTC noise only. A high S/N ratio can be realized when illuminance is low by switching "MODE1" and "MODE2" in accordance with the storage time.

It is to be noted that although the one-pixel one-cell configuration comprising one photodiode (PD) and four transistors has been described in the foregoing embodiments, the KTC noise can be reduced when the illuminance is low even in the one-pixel one-cell configuration comprising one photodiode (PD) and five transistors shown in FIG. 10 by switching "MODE1" and "MODE2".

Moreover, a polarity of an AD-converted signal in "MODE1" is reversed from the same in "MODE2". In FIG. 12, an AD-converted output in "MODE1" is reversed from the same in "MODE2". Additionally, in FIG. 2, a polarity of the RAMP waveform in "MODE1" is reversed from the same in "MODE2". Besides, there is a method which switches an input polarity of an operational amplifier type comparator in an AD conversion circuit depending on "MODE1" and "MODE2". In this case, a signal is input to a positive side of the comparator and a RAMP waveform is input to a negative side in "MODE1". On the other hand, a signal is input to the negative side of the comparator and a RAMP waveform is input to the positive side in "MODE2". Further, a reversal amplifier may be provided at the input of the comparator so that whether the reversal amplifier is used may be switched depending on "MODE1" and "MODE2". Furthermore, although the description has been given as to the example of the VGA type image sensor having 330000 pixels in the foregoing embodiments, the number of pixels may be increased.

The conventional CMOS image sensor is usually operated while shifting the storage start time of each photodiode for each horizontal line in accordance with an operating frequency of one frame. Therefore, the storage start time differs from the first horizontal line to the last horizontal line, there is an inconvenience that an image is inclined when a moving subject is imaged, and hence lack of the simultaneity is pointed out.

On the other hand, this embodiment performs the operation of reading signals stored in the two-dimensionally arranged photodiodes for two or more horizontal lines in one horizontal effective scanning period in accordance with each line in a time-sharing manner in the electronic shutter operation of the CMOS image sensor. As the storage time in this electronic shutter operation is short, the number of lines to be read from the photodiodes in one horizontal effective scanning period is increased. The simultaneity can be improved by this method in accordance with the storage time in the electronic shutter operation without changing the vertical retrace line period.

In still another embodiment, in the electronic shutter operation in the CMOS image sensor, there is carried out an operation which simultaneously discharges signals from all of the two-dimensionally arranged photodiodes, then stores signals in each photodiode and simultaneously reads the signals in all the photodiodes after the storage time by setting the vertical retrace line period of one frame (or one field) to 9.15 mS which is 1/2 of a minimum light emission cycle of a fluorescent lamp or 5 mS or above and to approximately 1/2 or below of one frame period (or one field period).

When the vertical retrace line period is reduced to 1/2, a light quantity can be controlled at a 1/2 step in an entire one-frame period. That is, the storage time can be controlled in accordance with one frame, a 1/2 frame, a 1/4 frame .... Furthermore, when the storage time is set for a 1/2 frame or below, the storage time can be controlled in a time which is not more than one horizontal scanning period.

On the other hand, when the vertical retrace line period is set to 4.15 mS which is 1/2 of the minimum light emission cycle of a fluorescent lamp or 5 mS or to 8.3 mS which is the minimum light emission cycle of a fluorescent lamp or 10 mS, continuous moving image capturing in, e.g., the MPEG mode or the Motion JPEG mode can be realized. In particular, at an aspect ratio of 9:16 in the HDTV mode, the operation which can directly display an image in a monitor without using a memory can be carried out. Additionally, the same operation as that at a conventional drive frequency can be effected without increasing the number of scanning lines per frame.

Although the description has been given as to the example of the progressive mode which can obtain one image in one frame period in this embodiment, an interlace mode which realizes one screen in two fields can be likewise applied.

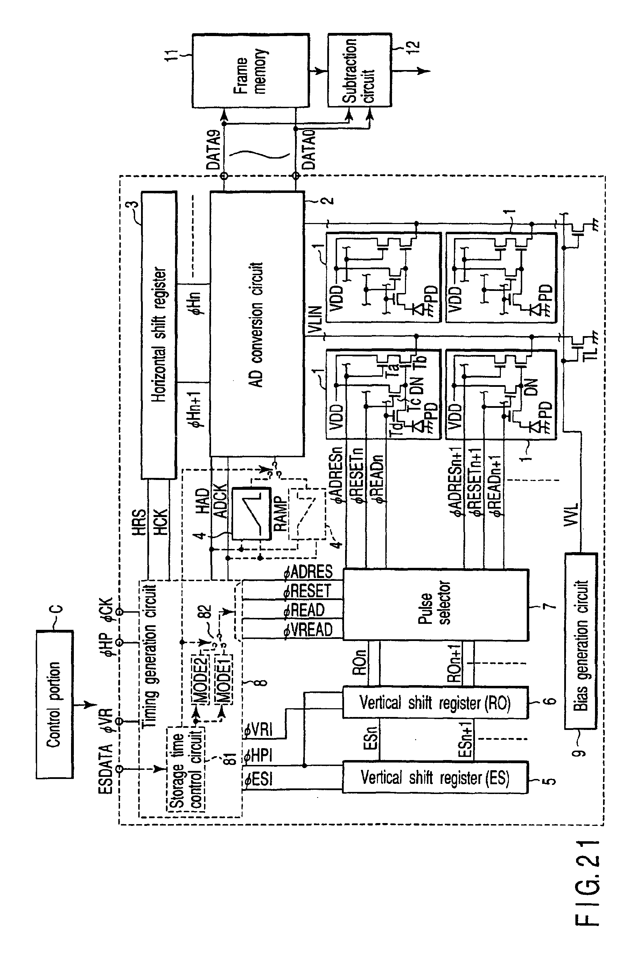

FIG. 21 is a view showing a circuit configuration of a CMOS image sensor (a solid-state imaging device) S having 330000 pixels formed on a semiconductor substrate according to a third embodiment of the present invention. In FIG. 21, like reference numerals denote parts equal to those in FIG. 2. In FIG. 21, a frame memory 11 and a subtraction circuit 12 are connected to an AD conversion circuit 2, and the frame memory 11 is connected to the subtraction circuit 12.

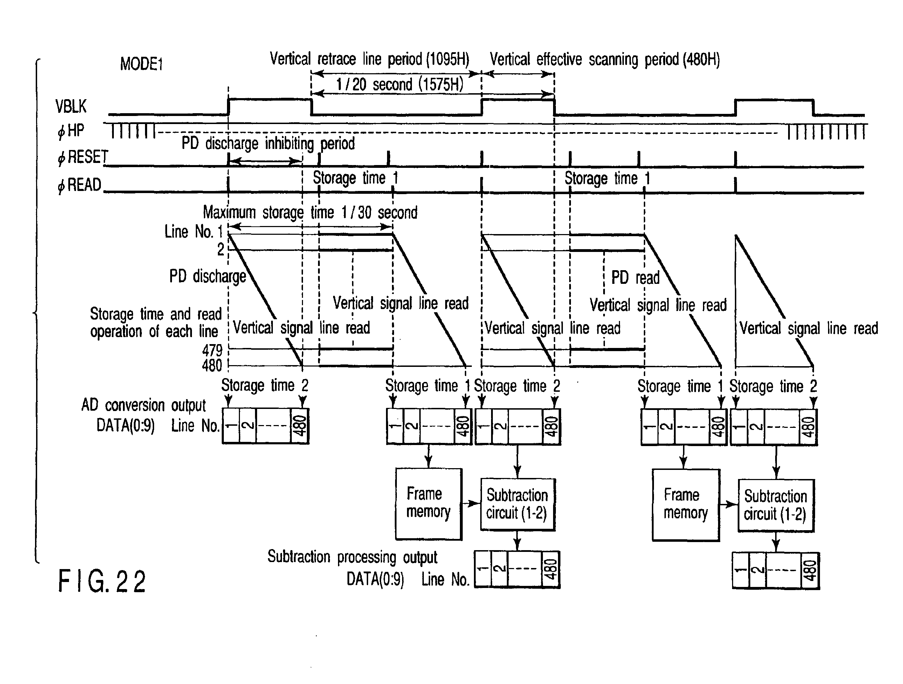

FIG. 22 is a timing chart showing an operation of the CMOS image sensor according to the third embodiment. In FIG. 22, a storage time of a photodiode is indicated as a storage time 1. In this third embodiment, a vertical retrace line period is 1095H, nd a vertical effective scanning period is 480H.

As can be understood from FIG. 22, the storage start time is equal with respect to all the horizontal lines Nos. 1 to 480 in "MODE1", and the PD discharge operation and the PD read operation are performed with the same timing in all the horizontal lines Nos. 1 to 480. Signals read to the detection portion (DN) are sequentially output in a 1/3 period in one frame (1575H) (or one field). However, the PD discharge operation cannot be performed simultaneously with the operation of outputting signal charges to the vertical signal line (VLIN). In the operation of outputting signal charges of the horizontal lines Nos. 1 to 480 to the vertical signal line (VLIN), ΦRESET is set to HI before setting ΦREAD to HI, and a leak current in the detection portion (DN) is removed. Then, signals are read to the detection portion (DN) from the photodiode (PD).

In the storage time 1, signal charges are stored in all the photodiodes (PD) in a 2/3 period of one frame (1575H) (or one field), and the signal charges stored in all the photodiodes (PD) are simultaneously read to the detection portions (DN). Thereafter, the signal charges of the horizontal lines Nos. 1 to 480 are sequentially read to the vertical signal line (VLIN) in a 1/3 period of one frame. The signals read to the vertical signal line (VLIN) are sequentially converted into digital signals in the AD conversion circuit 2 and stored in the frame memory 11. At this moment, a signal indicative of a leak current (dark current) in each detection portion (DN) is also stored together with the signals of each photodiode (PD) in the frame memory 11.

Subsequently, the electric charges stored in the detection portion (DN) by leakage currents without applying a ΦREAD pulse are sequentially read to the vertical signal line (VLIN) after all detection portions (DN) are reset in the beginning of a vertical effective scanning period (a 1/3 period of one frame). The signals read to the vertical signal line (VLIN) are sequentially converted into digital signals in the AD conversion circuit 2 and input to the subtraction circuit 12. At this moment, the signal indicative of a leak current in the detection portion (DN) only is input to the subtraction circuit 12.

The signal of the photodiode (PD) and the signal indicative of a leak current of the detection portion (DN) in a cell which has output the signal indicative of a leak current input to the subtraction circuit 12 is reads to the subtraction circuit 12 from the frame memory 11. The subtraction circuit 12 subtracts the signal indicative of a leak current of the detection portion (DN) input from the AD conversion circuit 2 from the signal of the photodiode (PD) and the signal indicative of a leak current of the detection portion (DN) read from the frame memory 11, and outputs an obtained signal. It is to be noted that a magnitude of the leak current of the detection portion (DN) is approximately 100-fold of a dark current in the photodiode (PD).

It is to be noted that the signal of the photodiode (PD) and the signal indicative of the leak current of the detection portion (DN) are stored in the frame memory 11 and then the signal indicative of the leak current of the detection portion (DN) only is input to the subtraction circuit 12 in the above-described example, but the signal of the photodiode (PD) and the signal indicative of the leak current of the detection portion (DN) may be input to the subtraction circuit 12, then the signal indicative of the leak current of the detection portion (DN) only may be stored in the frame memory 11, and the same subtraction processing may be executed.

According to the third embodiment, by removing a leak current in the detection portion (DN), an image whose image quality is further improved can be obtained.

As described above, according to the solid-state imaging device according to the embodiments of the present invention, the image quality can be improved. That is, the drawback that the CMOS image sensor does not have the simultaneity can be improved, the simultaneity can be improved by using the sensor having a small image size, image capturing at low illuminance coping with a KTC noise can be realized, and an image contending with a leak current in the detection portion (DN) can be obtained. It is to be noted that the solid-state imaging device according to the embodiments of the present invention can be also applied to a mobile phone with a camera function or the like as well as a digital camera and a digital video camera.

According to the solid-state imaging device of the embodiments of the present invention, a solid-state imaging device, a digital camera and a digital video camera which improve the image quality can be provided.

## Claims

1. A solid-state imaging device which discharges a signal from a photodiode (PD) in each cell (1) in which the photodiode, a read gate (Td) which reads a signal from the photodiode and a detection portion (DN) which detects a read signal are two-dimensionally arranged on a semiconductor substrate, then stores a signal in each photodiode, and reads a signal from each photodiode after a storage time, the solid-state imaging device **characterized by** comprising:

   a circuit (5, 6, 7, 8) which performs an operation of applying to each corresponding cell a first pulse signal which is used to discharge a signal in each photodiode corresponding to one horizontal line for a plurality of horizontal lines in a first horizontal scanning period; and an operation of applying to each corresponding cell a second pulse signal which is used to read a signal in each photodiode corresponding to one horizontal lines for a plurality of horizontal lines in a second horizontal scanning period.

2. The solid-state imaging device according to claim 1, **characterized in that** the circuit (5, 6, 7, 8) increases the number of times of the operations of applying the first and second pulse signals in the first and second horizontal scanning periods as the storage time becomes shorter.

3. The solid-state imaging device according to claim 1, **characterized by** comprising a switching circuit (81) which switches a first operation mode which detects a signal level of the detection portion by reading a signal stored in the photodiode to the detection portion, then detects a reset level of the detection portion by resetting the detection portion, and outputs a signal based on a difference between the detected signal level and reset level; and a second operation mode which detects a reset level of the detection portion by resetting the detection portion before reading a signal from the photodiode, then detects a signal level of the detection portion by reading a signal stored in the photodiode to the detection portion, and outputs a signal based on a difference between the detected reset level and signal level,

   the switching circuit switching to the first operation mode when the storage time is less than a first time, and switching to the second operation mode when the storage time is not less than the first predetermined time.

4. The solid-state imaging device according to claim 1, **characterized in that** the circuit (5, 6, 7, 8) simultaneously discharges and simultaneously reads signals in the respective photodiodes.

5. The solid-state imaging device according to claim 1, **characterized in that** the circuit (5, 6, 7, 8) generates a signal read pulse of the photodiode twice or more in a vertical scanning period in a one-frame or one-field period, adds a signal read from the photodiode, and outputs an obtained signal.

6. A solid-state imaging device which discharges a signal from a photodiode (PD) in each cell (1) in which the photodiode, a read gate (Td) which reads a signal from the photodiode and a detection portion (DN) which detects a read signal are two-dimensionally arranged on a semiconductor substrate, then stores a signal in each photodiode, reads a signal from each photodiode to the detection portion after a storage time, and subsequently outputs a signal from the detection portion, the solid-state imaging device **characterized by** comprising:

   a circuit (5, 6, 7, 8) which performs an operation of applying to each corresponding cell a first pulse signal which is used to discharge a signal in each photodiode corresponding to one horizontal line for a plurality of horizontal lines in a first horizontal scanning period; an operation of applying to each corresponding cell a second pulse signal which is used to read a signal in each photodiode corresponding to one horizontal line for a plurality of horizontal lines in a second horizontal scanning period; and an operation of applying to each corresponding cell a third pulse signal which is used to output a signal in the detection portion corresponding to one horizontal line in accordance with each horizontal retrace line period.

7. The solid-state imaging device according to claim 6, **characterized in that** the circuit (5, 6, 7, 8) performs an operation of simultaneously discharging signals in the respective photodiodes corresponding to all horizontal lines; and an operation of simultaneously reading signals in the respective photodiodes corresponding to all horizontal lines.

8. The solid-state imaging device according to claim 6, **characterized in that** the circuit (5, 6, 7, 8) performs an operation of sequentially discharging signals in the respective photodiodes corresponding to a plurality of horizontal lines in a first horizontal effective scanning period in accordance with each horizontal line; and an operation of sequentially reading signals in the respective photodiodes corresponding to a plurality of horizontal lines in a second horizontal effective scanning period in accordance with each horizontal line.

9. The solid-state imaging device according to claim 6, **characterized in that** the circuit (5, 6, 7, 8) performs an operation of sequentially discharging signals in the respective photodiodes corresponding to a plurality of sets of horizontal lines in a first horizontal effective scanning period in accordance with each set of horizontal lines; and an operation of sequentially reading signals in the respective photodiodes corresponding to a plurality of sets of horizontal lines in a second horizontal effective scanning period in accordance with each set of horizontal lines.

10. The solid-state imaging device according to claim 6, **characterized by** comprising a switching circuit (81) which switches a first operation mode which detects a signal level of the detection portion by reading a signal stored in the photodiode to the detection portion, then detects a reset level of the detection portion by resetting the detection portion, and outputs a signal based on a difference between the detected signal level and reset level; and a second operation mode which detects a reset level of the detection portion by resetting the detection portion before reading a signal from the photodiode, then detects a signal level of the detection portion by reading a signal stored in the photodiode to the detection portion, and outputs a signal based on a difference between the detected reset level and signal level,

   the switching circuit switching to the first operation mode when the storage time is less than a first time, and switching to the second operation mode when the storage time is not less than the first predetermined time.

11. The solid-state imaging device according to claim 10, **characterized in that** the circuit (5, 6, 7, 8) performs in the second operation mode an operation of discharging a signal in each photodiode corresponding to one horizontal line in a first horizontal retrace line period; and an operation of reading a signal in each diode photodiode corresponding to one horizontal line in a second horizontal retrace line period.

12. The solid-state imaging device according to claim 6, **characterized in that** a signal is stored in each diode photodiode after discharging a signal from the photodiode in each diode cell, a signal is read from each diode photodiode to the detection portion after a storage time, and then a difference between a first signal output from the detection portion and a second signal output from the detection portion after outputting the first signal is taken, the detection portion is reset, and the same storage time is passed without reading a signal from the photodiode.

13. The solid-state imaging device according to claim 6, **characterized in that** the storage time is set to an arbitrary period in a full period of one frame or a vertical retrace line period.

**14.** The solid-state imaging device according to claim 6, **characterized in that** the circuit (5, 6, 7, 8) generates a signal read pulse of the photodiode twice or more in a vertical scanning period in a one-frame or one-field period, adds a signal read from the photodiode, and outputs an obtained signal.

**15.** A digital camera **characterized by** using the solid-state imaging device according to claim 1.

**16.** A digital camera **characterized by** using the solid-state imaging device according to claim 6.

**17.** A digital video camera **characterized by** using the solid-state imaging device according to claim 1.

**18.** A digital video camera **characterized by** using the solid-state imaging device according to claim 1.

FIG.1

F I G. 2

<u>7</u>

FIG.3

EP 1 549 046 A2

Horizontal retrace line period

Vertical retrace line period

Vertical effective scanning period

Horizontal effective scanning period

PD discharge

PD read

Storage time

Detection portion reset

Vertical signal line read

MODE1

VBLK

HBLK

φHP

φREAD1

φREAD2

φREAD480

φRESET1

φRESET2

φRESET3

φRESET480

φADRES1

φADRES2

φADRES3

φADRES480

F I G. 4

19

FIG.5

FIG. 6

EP 1 549 046 A2

FIG.7A

φREAD  φRESET  VDD

Optical signal  Output

p

PD

n  p  n  n

Detection portion (DN)

FIG.7B

Before 1PD read

Potential

Signal charge Q1

Vh

PVDD

FIG.7C

After 1PD read

Potential

PVDD

Signal charge Q1

FIG.7D

Before 2PD read

Potential

Signal charge Q2

PVDD

Signal charge Q1

FIG.7E

After 2PD read

Potential

PVDD

Signal charge Q1 + Q2

F I G.8

FIG.9

EP 1 549 046 A2

FIG.10

EP 1 549 046 A2

206 Lens

Sensor
S

Timing generation
video signal
processing portion
202

Image data
compression
portion
203

Liquid crystal monitor
205

~200

Microcomputer
201

Image memory
204

Power supply portion
207

External control from personal computer

FIG.11

F I G. 1 2

FIG.13

FIG.14

Horizontal retrace line period — Horizontal effective scanning period

HBLK

$\phi$HP

$\phi$READ1 — PD discharge — PD read

$\phi$READ2

$\phi$READ3

$\phi$READ4

Storage time

$\phi$RESET1 — Detection portion reset

$\phi$RESET2

$\phi$RESET3

$\phi$RESET4

Vertical signal line read

$\phi$ADRES1

$\phi$ADRES2

$\phi$ADRES3

$\phi$ADRES4

F I G. 1 5

FIG.16

FIG.17

Horizontal retrace line period    Horizontal effective scanning period

HBLK
φHP
ES1
ES2
ES3
ES4
ES5
ES6
ES7
R01
R02
R03
R04
R05
R06

Storage time

EP 1 549 046 A2

EP 1 549 046 A2

Vertical retrace line period (45H)    Vertical effective scanning period (480H)

1 / 30 second (525H)

VBLK

φHP

Storage time 1          Storage time 2          Storage time 3

Line No. 1
2

MODE1        PD discharge        PD read    PD discharge    PD read    PD discharge    PD read

Storage time and read
operation of each line        Vertical signal line read    Vertical signal    Vertical signal line read
                                                            line read

479
480

Output
DATA(0:9)    Line No.    1  2  --------  480    1  2  --------  480    1  2  --------  480

Storage time 1          Storage time 2          Storage time 3

Line No. 1
2

MODE2        PD discharge        PD read    PD discharge    PD read    PD discharge    PD read

Storage time and read
operation of each line        Vertical signal line read    Vertical signal line read    Vertical signal line read

479
480

# FIG. 18

Storage time control

S11

MODE switching — Manual → MODE setting
Sports mode : MODE1
Standard mode : MODE2 ~S12

Auto

S13

Gain up ? — Yes → MODE setting
Standard mode : MODE2 ~S14

No

S15

Yes ← Is signal level appropriate ?

No

S16

Change storage time (TS)

Read pulse generation circuit

S17

525H>TS

Yes

No

S19

Set MODE 2

S18

Set MODE 1

| TS : Storage time line (H) number | READ occurrence number in 1H | Read occurrence line number | Degree of improvement in distorted line number |
|---|---|---|---|
| 525 | 1 | 1 | 524 |
| | | | |
| 524~263 | 1~ | 1 | ~523 |
| 262~132 | 2~ | 1 | ~261 |
| 131~66 | 4~ | 1 | ~130 |
| 65~33 | 8~ | 1 | ~64 |
| 32~17 | 16~ | 1 | ~31 |
| 16~6 | 32 | 2~ | ~7 |
| 5~3 | 32 | 4~ | ~3 |
| 2 | 32 | 9~ | ~1 |
| 1 | 32 | 17 | 0 |

S20 — Generate pulse

φREAD     φRESET

F I G. 19

F I G. 2 0

EP 1 549 046 A2

F I G. 21

MODE1

VBLK

φHP

φRESET

φREAD

Vertical retrace line period (1095H)  Vertical effective scanning period (480H)

1/20 second (1575H)

PD discharge inhibiting period

Storage time and read operation of each line

Maximum storage time 1/30 second

Line No. 1
2

PD discharge

Storage time 1

Vertical signal line read

Storage time 2

Vertical signal line read

Storage time 1

PD read

Vertical signal line read

Vertical signal line read

Storage time 2

Vertical signal line read

479
480

AD conversion output
DATA(0:9)  Line No.

Storage time 2 | 1 | 2 | --- | 480 |

Storage time 1 | 1 | 2 | --- | 480 |

Storage time 2 | 2 | --- | 480 |

Storage time 1 | 1 | 2 | --- | 480 |

Frame memory

Subtraction circuit (1-2)

Frame memory

Subtraction circuit (1-2)

Subtraction processing output
DATA(0:9)  Line No.

| 1 | 2 | --- | 480 |

| 1 | 2 | --- | 480 |

FIG. 22

37

FIG.23

72

φREAD
φRESET
φADRES

RON

ESn

ROn+1

ESn+1

φADRESn

φRESETn

φREADn

φADRESn+1

φRESETn+1

φREADn+1

FIG. 24

Vertical retrace line period (45H)    Vertical effective scanning period (480H)

1 / 30 second (525H)

VBLK

φHP

Storage time 1    Storage time 2    Storage time 3

Line No. 1
2

PD discharge    PD read    PD discharge    PD read    PD discharge    PD read

Storage time and read
operation of each line

Vertical signal line read    Vertical signal line read    Vertical signal line read

479
480

Output
DATA(0:9)  Line No. | 1 | 2 | -------------   | 1 | 2 | -------------   | 1 | 2 | -------------

FIG.25